# EUROPEAN PATENT SPECIFICATION

(11) **EP 1 862 842 B1**
(45) Date of publication and mention of the grant of the patent: **09.09.2009**
(21) Application number: 07109348.8
(22) Date of filing: 31.05.2007
(51) Int. Cl.: G02B 27/64, H04N 5/232

(54) **Image stabilizer, lens device and imaging apparatus**
Bildstabilisator, Linsenvorrichtung und Abbildungsvorrichtung
Stabilisateur d'image, dispositif de lentille et appareil d'imagerie

(30) Priority: 31.05.2006 JP 2006152427
(43) Date of publication of application: 05.12.2007
(73) Proprietor: Sony Corporation, Minato-ku Tokyo (JP)
(72) Inventor: Takahashi, Tatsuyuki, Minato-ku, Tokyo (JP)
(74) Representative: Thévenet, Jean-Bruno

(56) References cited:
- JP-A- 2006 065 352
- US-A1- 2006 017 818
- US-A1- 2006 055 787

## Description

### BACKGROUND OF THE INVENTION

### Field of the Invention:

The present invention relates to an image stabilizer which stabilizes image blurred by vibration or the like at the time of shooting by controlling a correcting lens to move in a direction perpendicular to an optical axis of a lens system, and controlling an optical axis of the correcting lens to correspond with the optical axis of the lens system, if a hand shake or the like occurs; a lens device which has the image stabilizer; and an imaging apparatus incorporating the lens device.

### Description of the Related Art:

In recent years, performance of an imaging apparatus such as a digital still camera and a video camera has been improved remarkably, and it became possible for anyone to easily shoot still pictures and moving pictures with high image quality and with high efficiency. With a lens, a CCD (solid-state imaging device) and an image processing circuit, performance of which has been improved, performance of an imaging apparatus has also been improved.

However, even though the lens, the CCD and the like can be made higher in performance, if hand shake or vibration occurs to photographer's hands by which a camera (imaging apparatus) is held, blurring occurs in images with high resolution and shot images are blurred. Accordingly, a part of relatively expensive cameras are equipped with an image stabilizer capable of stabilizing images blurred by camera shake or the like upon image pickup. However, cameras that may require such image stabilizer are not professional-level cameras, and it is to be understood that image stabilizers are indispensable to consumer cameras for a large number of amateur photographers with less shooting experience.

Further, in general, a demand for smaller and lighter cameras (imaging apparatuses) is strong and cameras which are light in weight and easy to carry are favored by most photographers. However, since an image stabilizer in related art is comparatively large in size, when such large image stabilizer is mounted on a camera body, the whole of the camera becomes large in size, which is against a demand for making cameras smaller in size and lighter in weight. In addition, image stabilizers in related art require a large number of components and a problem occurs, in which a cost of cameras increases as the number of components increases.

Japanese Unexamined Patent Application Publication No. 2000-258813 discloses an image stabilizer in related art, for example. In this Patent Reference, there is described an image stabilizer used for optical apparatuses such as a video camera and a lens device using the image stabilizer. The image stabilizer described in this Patent Reference (hereinafter referred to as "a first related-art example") stabilizes images by moving part of an imaging lens to the inside of a surface perpendicular to an optical axis, including: a lens holding frame, a first guide, a second guide, a first driver, a second driver, and a position detector. The lens holding frame holds a correcting lens. The first guide guides the lens holding frame to move in a first direction on a surface perpendicular to the optical axis. The second guide guides the lens holding frame to move in a second direction perpendicular to the first direction. The first driver and second driver drive the lens holding frame in the first and second directions, respectively. The position detector detects the position of the correcting lens. In this image stabilizer, the first guide and the second driver, or the second guide and the first driver are arranged to partially overlap, when seen from an optical axis direction.

According to the image stabilizer with the structure described in Japanese Unexamined Patent Application Publication No. 2000-258813, the following effectiveness may be obtained, for example. Specifically, the width and height of the stabilizer can be reduced by arranging a guide shaft for moving a correcting lens, and a coil or magnet for driving the correcting lens such that a pitch moving mechanism and a yaw driver, or a yaw moving mechanism and a pitch driver are arranged to overlap when seen from an optical axis direction.

Japanese Unexamined Patent Application Publication No. 2003-270695 also discloses an image stabilizer in related art, for example. In this patent reference, there is described an image stabilizer used for optical apparatuses such as a video camera and a lens device using the image stabilizer. The image stabilizer described in this Patent Reference (hereinafter referred to as "a second related-art example") stabilizes images by moving part of an imaging lens to the inside of a surface perpendicular to an optical axis, including: a lens holding frame, a first guide, a second guide, a first driver, a second driver, a position detector, and a fixer. The lens holding frame includes a first restricting portion that holds a correcting lens and that restricts the moving range of the correcting lens. The first guide guides the lens holding frame to move in a first direction on a surface perpendicular to the optical axis. The second guide guides the lens holding frame to move in a second direction perpendicular to the first direction. The first driver and second driver drive the lens holding frame in the first and second directions, respectively. The position detector detects the position of the correcting lens. The fixer includes a second restricting portion that is engaged with the first restricting portion and that restricts the movable range of the correcting lens. In this image stabilizer, the first restricting portion and the second restricting portion are arranged concentrically with the optical axis and on the inside of the first and second drivers.

According to the image stabilizer with the structure described in Japanese Unexamined Patent Application Publication No. 2003-270695, the following effectiveness may be obtained, for example. Specifically, a movable restricting member is placed between the correcting lens and the drivers approximately concentrically with the optical axis so as to restrict the movable range of the correcting lens, and a non-engaging member which engages with the restricting member is provided to a fixed frame. Accordingly, movement of the correcting lens is restricted inside a movable portion, thereby enabling a compact stabilizer to be obtained.

Japanese Unexamined Patent Application Publication No. H03-186823 further discloses an image stabilizer in related art, for example. In this patent reference, there is described a vibration-prevention device provided in a camera or the like, which detects camera shakes relatively low in frequency and uses the detected results as information for the prevention of image blurring, thereby preventing image blurring. The vibration-prevention device described in this Patent Reference (hereinafter referred to as "a third related-art example") includes: a correcting optical mechanism, a vibration detector and a vibration-prevention controller. The correcting optical mechanism is provided inside a lens barrel holding a lens group, and deviates the optical axis of the lens group. The vibration detector detects vibration applied to the lens barrel. The vibration-prevention controller prevents vibration by driving the correcting optical mechanism upon receiving a signal from the vibration detector. The correcting optical mechanism has: a correcting lens, a fixing frame, a first holding frame, a second holding frame, first and second coils, first and second drivers, and first and second position detectors. The fixing frame fixes the correcting lens. The first holding frame holds the fixing frame such that the fixing frame can be moved in the first direction different from the optical axis direction of the lens group. The second holding frame holds the first holding frame such that the first holding frame can be moved in the second direction different from the optical axis direction and the first direction, and is fixed to the lens barrel. The first and second coils move the first and second holding frames in the first and second directions, respectively. The first and second drivers are formed of first and second magnetic field generating members facing the first and second coils. The first and second position detectors detect the amount of the fixing frame and the first holding frame being moved in the first and second directions. At least the first and second magnetic field generating members, or the first and second position detectors are provided to a fixed member which is fixed to the lens barrel and which includes the second holding frame.

According to the vibration-prevention device with the structure described in Japanese Unexamined Patent Application Publication No. H03-186823, the following effectiveness may be obtained. Specifically, the vibration-prevention device is capable of responding to high-frequency vibrations without cost increase and large space.

In the above-described first to third related-art examples, a position detector is provided to detect the position of a correcting lens. The position detector includes: an optical projector formed of a light-emitting diode (LED) and an optical receiver formed of a semiconductor position-detecting device (PSD) in respective cases. Here, in any of the cases of the related-art examples, there is obtained a position relationship in which the direction of a relative change in a detecting device and a slit of a light-shielding member or the direction of a relative change in the detecting device and a magnetic pole boundary of a magnet is perpendicular to both a first direction and a second direction that are the moving directions of the correcting lens.

As a result, if the positions of a moving frame and a supporting frame relatively change in a correcting state, they are relatively changed in a direction perpendicular to the slit of the light-shielding member or the magnetic pole boundary of the magnet that are the detection reference position. Accordingly, the amount of relative distance change of the moving frame and the supporting frame directly represents the amount of change in the slit of the light-shielding member or the amount of change in the magnetic pole boundary of the magnet. Therefore, it is difficult to make the shift amount (correction angle) of the correcting lens large, hence when a shift amount is large in such a state of high-power zooming, image stabilizer may not sufficiently be operated, which may cause a problem.

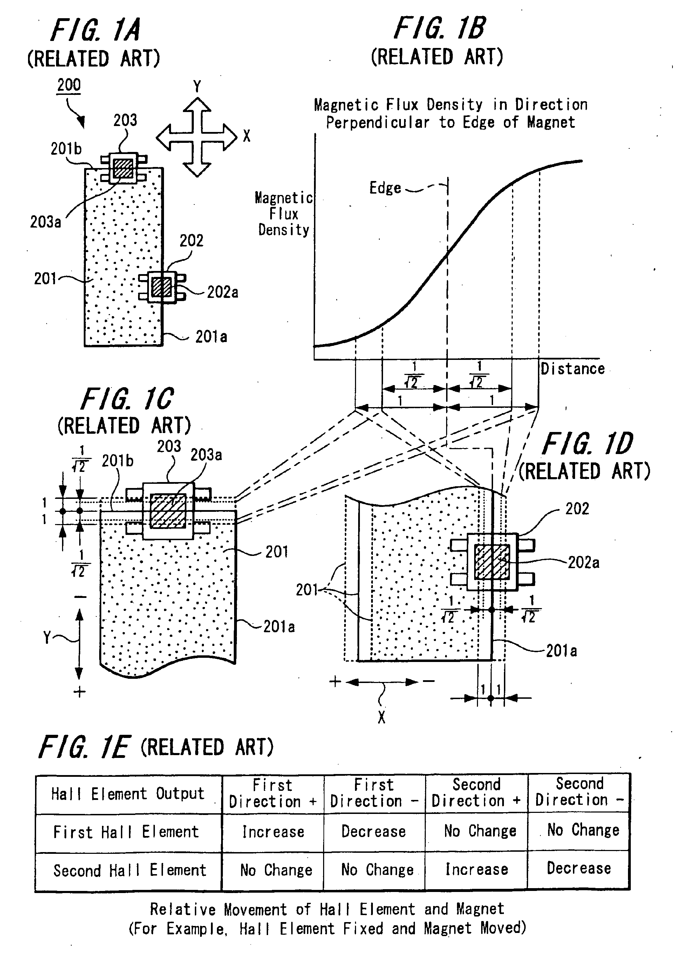

The above-described problem is explained in detail, referring to FIGS. 1A to 1E. FIG. 1A shows a position-detecting mechanism 200 of an image stabilizer according to related art. The position-detecting mechanism 200 includes a magnet 201 and two hall elements 202 and 203 capable of moving relatively. The magnet 201 is formed of a rectangular board, the widthwise direction of which is set in a first direction X in which a correcting lens not shown in the drawings moves, and the lengthwise direction of which is set in a second direction Y perpendicular to the first direction X. The two hall elements 202 and 203 detect the relative positions in relation to the magnet 201, by detecting the magnetic force of the magnet 201.

The first hall element 202 detects position information regarding the first direction X, and is placed in a position overlapped with one edge 201a on a long side of the magnet 201. The second hall element 203 detects position information regarding the second direction Y, and is placed in a position overlapped with one edge 201b on a short side of the magnet 201. The first and second hall elements 202 and 203 are placed such that centers of detecting portions 202a and 203a approximately correspond with the edges 201a and 201b of the magnet 201, respectively. Thus, the first hall element 202 and second hall element 203 detect a magnetic flux density having a characteristic shown in FIG. 1B.

FIG. 1C shows a relationship between a relative movement of the magnet 201 and second hall element 203 and a magnetic flux density detected. FIG. 1D shows a relationship between a relative movement of the magnet 201 and first hall element 202 and a magnetic flux density detected. Further, FIG. 1E is a table explaining states of magnetic flux densities detected in FIGS. 1C and 1D.

As shown in FIG. 1D, it is assumed here that the relative movement occurs only in the first direction X, and that the amount of displacement in the second direction Y is zero. In this case, regarding the first hall element 202, the position where the center of its detecting portion 202a approximately corresponds with the edge 201a on the long side of the magnet 201 is made a reference position. If there is a movement in a direction of relatively coming closer (a first direction X+), the magnetic flux density detected increases, and if there is a movement in a direction of relatively going away (a first direction X-), the magnetic flux density detected decreases. On this occasion, the second hall element 203 moves along the edge 201b on the short side of the magnet 201, however, there is no change in the magnetic flux density detected with the second hall element 203 moving in one direction or in the other direction, and so the amount of change is zero.

Also, as shown in FIG. 1C, it is assumed that the relative movement occurs only in the second direction Y, and that the amount of displacement in the first direction X is zero. In this case, regarding the second hall element 203, the position where the center of its detecting portion 203a approximately corresponds with the edge 201b on the short side of the magnet 201 is made a reference position. If there is a movement in a direction of relatively coming closer (a second direction Y+), the magnetic flux density detected increases, and if there is a movement in a direction of relatively going away (a second direction Y-), the magnetic flux density detected decreases. On this occasion, the first hall element 202 moves along the edge 201a on the long side of the magnet 201, however, there is no change in the magnetic flux density detected with the first hall element 202 moving in one direction or in the other direction, and so the amount of change is zero.

If the magnetic flux density in the first direction X and in the second direction Y is detected using the first hall element 202 and second hall element 203 having the above-described characteristics, the relative moving amount of the magnet 201 and the hall elements 202 and 203 is directly detected, and the shortest distance of the relative moving amount represents detection accuracy on the magnetic flux density.

Other prior art is described in US 2006/0055787 A, JP 2006 065352 A and US 2006/0017818 A.

### SUMMARY OF THE INVENTION

In an image stabilizer in the related art, there is a position relationship in which a detecting device and a slit of a light-shielding member or a magnetic pole boundary of a magnet are directed perpendicularly to both a first direction and a second direction that are the moving (movable) directions of a correcting lens. Thus, the relative moving amount between the magnet and hall elements directly represents detection accuracy at the time of detection, so that it is difficult to obtain a large shift amount (correction angle) of the correcting lens in relation.to the relative moving amount. Accordingly, it is difficult to cope with high-power zooming or the like that may require a large shift amount, preventing correction accuracy in stabilizing image from being improved.

The present invention is defined according to the appended set of claims.

An image stabilizer according to an embodiment of the present invention includes: an electric actuator having a coil and a magnet which are capable of moving relatively; a moving frame to which one of the coil and the magnet, and a correcting lens are fixed; and a supporting frame to which the other of the coil and the magnet is fixed and which supports the moving frame to be capable of moving. In the image stabilizer, the correcting lens is capable of moving in a first direction perpendicular to an optical axis of a lens system and in a second direction perpendicular to the first direction and the optical axis by the electric actuator that moves the moving frame, and the optical axis of the correcting lens is controlled to correspond with the optical axis of the lens system, thereby stabilizing images obtained through a lens system. Further, the image stabilizer includes a first hall element and a second hall element which detect position information on the correcting lens regarding the first direction and the second direction by detecting the magnetic force of the magnet. The first hall element and the second hall element are arranged as described below. Accordingly, the optical axis of the correcting lens is positioned to correspond with the optical axis of the lens system. Centers of magnetic force detecting portions of the hall elements approximately face positions in directions rotationally shifted from the first direction and the second direction by an appropriate angle on the same plane and overlapped with the edge of the magnet. Thus, the first hall element and the second hall element are arranged to detect the magnetic force in the directions perpendicular to the directions in which the edge extends.

In the image stabilizer according to an embodiment of the present invention, the first hall element and the second hall element are arranged such that the centers of the magnetic force detecting portions approximately face positions in directions rotationally shifted from the first direction and the second direction by an appropriate angle on the same plane and overlapped with the edge of the magnet to detect the magnetic force in the directions perpendicular to the directions in which the edge extends. Therefore, a large shift amount (correction angle) of the correcting lens may be obtained in relation to the relative moving amount of the magnet and the hall elements. Hence, the image stabilizer can stabilize images with accuracy in the case of high-power zooming or the like that may require a large shift amount.

In the image stabilizer, the lens device and the imaging apparatus according to an embodiment of the present invention, substantially a large relative moving amount of a magnet and hall elements can be obtained. Therefore, a large shift amount (correction angle) of the correcting lens may be obtained in relation to the relative moving amount of the magnet and the hall elements. Hence, the image stabilizer can stabilize images with accuracy in the case of high-power zooming or the like that may require a large shift amount.

### BRIEF DESCRIPTION OF THE DRAWINGS

FIGS. 1A to 1E are diagrams for explaining a correcting lens position-detecting mechanism used for an image stabilizer according to related art, in which FIG. 1A is an explanatory diagram showing a schematic configuration, FIG. 1B is a graph showing a relationship between the distance between a magnet and hall elements and a magnetic flux density, FIG. 1C is an explanatory diagram showing main parts in FIG. 1A being enlarged and being relatively moved in a second direction Y, FIG. 1D is an explanatory diagram showing main parts in FIG. 1A being enlarged and being relatively moved in a first direction X, and FIG. 1E is a table for explaining the output states of a first hall element and a second hall element;
FIG. 2 is an external perspective view showing a first embodiment of a lens device according to the present invention, as seen from the front side;
FIG. 3 is a front view of the lens device shown in FIG. 2;
FIG. 4 is a vertical sectional view of the lens device shown in FIG. 2;
FIG. 5 is an N-N line sectional view of the lens device shown in FIG. 3;
FIG. 6 is an exploded perspective view of the lens device shown in FIG. 2;
FIG. 7 is an explanatory diagram for explaining a lens system of the lens device shown in FIG. 2;
FIG. 8 is an exploded perspective view showing a first embodiment of an imaging apparatus according to the present invention, applied to a digital still camera;
FIG. 9 is a perspective view showing the first embodiment of an imaging apparatus according to the present invention, in which the digital still camera an objective lens of which is closed with a lens cover is seen from the front side;
FIG. 10 is a perspective view showing the first embodiment of an imaging apparatus according to the present invention, in which the digital still camera the objective lens of which is exposed by opening a lens cover is seen from the front side;
FIG. 11 is a rear view of the digital still camera shown in FIG. 9;
FIG. 12 is a plan view of the digital still camera shown in FIG. 9;
FIG. 13 is a perspective view of an image stabilizer with an electric actuator of a moving magnet system as seen from the front side, showing a first embodiment of an image stabilizer according to the present invention;
FIG. 14 is a perspective view of the image stabilizer shown in FIG. 13, as seen from the rear side;
FIG. 15 is a front view of the image stabilizer shown in FIG. 13;
FIG. 16 is a rear view of the image stabilizer shown in FIG. 13;
FIG. 17 is a plan view of the image stabilizer shown in FIG. 13;
FIG. 18 is a bottom view of the image stabilizer shown in FIG. 13;
FIG. 19 is a left side view of the image stabilizer shown in FIG. 13;
FIG. 20 is a right side view of the image stabilizer shown in FIG. 13;
FIG. 21 is an exploded perspective view of the image stabilizer shown in FIG. 13;
FIG. 22 is a perspective view of the electric actuator of the image stabilizer shown in FIG. 13;
FIG. 23 is a front view of the electric actuator shown in FIG. 22;
FIG. 24 is a rear view of the electric actuator shown in FIG. 22;
FIG. 25 is a plan view of the electric actuator shown in FIG. 22;
FIG. 26 is a bottom view of the electric actuator shown in FIG. 22;
FIG. 27 is a bottom view of the electric actuator shown in FIG. 26, from which a yoke has been removed;
FIG. 28 is a left side view of the electric actuator shown in FIG. 22;
FIG. 29 is a right side view of the electric actuator shown in FIG. 22;
FIG. 30 is a perspective view of a coil assembly body of the electric actuator shown in FIG. 22;
FIG. 31 is a plan view of the coil assembly body shown in FIG. 30;
FIG. 32 is a perspective view of a yoke and a magnet in the electric actuator shown in FIG. 22;
FIG. 33 is a perspective view of the magnet shown in FIG. 32;
FIG. 34 is a perspective view of an image stabilizer with an electric actuator of a moving coil system as seen from the front side, showing a second embodiment of an image stabilizer according to the present invention;
FIG. 35 is a perspective view of the image stabilizer shown in FIG. 34, as seen from the rear side;
FIG. 36 is a front view of the image stabilizer shown in FIG. 34;
FIG. 37 is a rear view of the image stabilizer shown in FIG. 34;
FIG. 38 is a plan view of the image stabilizer shown in FIG. 34;
FIG. 39 is a bottom view of the image stabilizer shown in FIG. 34;
FIG. 40 is a left side view of the image stabilizer shown in FIG. 34;
FIG. 41 is a right side view of the image stabilizer shown in FIG. 34;
FIG. 42 is an exploded perspective view of the image stabilizer shown in FIG. 34;
FIG. 43 is a perspective view of the electric actuator of the image stabilizer shown in FIG. 34;
FIG. 44 is a front view of the electric actuator shown in FIG. 43;
FIG. 45 is a rear view of the electric actuator shown in FIG. 43;
FIG. 46 is a plan view of the electric actuator shown in FIG. 43;
FIG. 47 is a bottom view of the electric actuator shown in FIG. 43;
FIG. 48 is a bottom view of the electric actuator shown in FIG. 47, from which a yoke has been removed;
FIG. 49 is a left side view of the electric actuator shown in FIG. 43;
FIG. 50 is a right side view of the electric actuator shown in FIG. 43;
FIG. 51 is a perspective view of a coil assembly body of the electric actuator shown in FIG. 43;
FIG. 52 is a plan view of the coil assembly body shown in FIG. 51;
FIG. 53 is a perspective view of a yoke and a magnet in the electric actuator shown in FIG. 43;
FIG. 54 is a perspective view of the magnet shown in FIG. 53;
FIG. 55 is a block diagram for explaining a concept of control with an image stabilizer according to an embodiment of the present invention;
FIG. 56 is a block diagram showing a first embodiment of a schematic configuration of an imaging apparatus according to the present invention;
FIG. 57 is a block diagram showing a second embodiment of the schematic configuration of an imaging apparatus according to the present invention; and

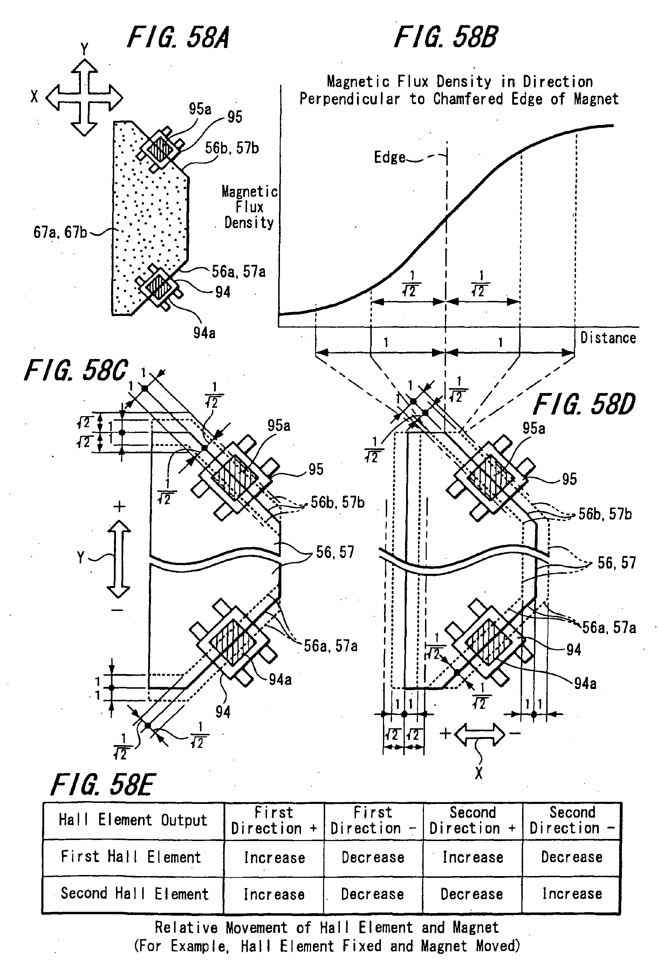

FIGS. 58A to 58E are diagrams for explaining a correcting lens position-detecting mechanism used for an image stabilizer according to an embodiment of the present invention, in which FIG. 58A is an explanatory diagram showing a schematic configuration, FIG. 58B is a graph showing a relationship between the distance between a magnet and hall elements and a magnetic flux density, FIG. 58C is an explanatory diagram showing main parts in FIG. 58A being enlarged and being relatively moved in a second direction Y, FIG. 58D is an explanatory diagram showing main parts in FIG. 58A being enlarged and being relatively moved in a first direction X, and FIG. 58E is a table for explaining the output states of a first hall element and a second hall element.

### DESCRIPTION OF THE PREFERRED EMBODIMENTS

A first hall element and a second hall element which detect position information on a correcting lens regarding a first direction and a second direction by means of magnetic force of a magnet are arranged such that centers of magnetic force detecting portions approximately face positions in directions rotationally shifted from the first direction and the second direction by an appropriate angle on the same plane and overlapped with edges of the magnet to detect the magnetic force in the directions perpendicular to the directions in which the edge extends. Accordingly, an image stabilizer, a lens device and an imaging apparatus including the first and second hall elements are obtained. In the image stabilizer, lens device, and imaging apparatus, a large shift amount (correction angle) of the correcting lens may be obtained in relation to the relative moving amount of the magnet and the hall elements. Hence, the image stabilizer can stabilize images with accuracy in the case of high-power zooming or the like that may require a large shift amount.

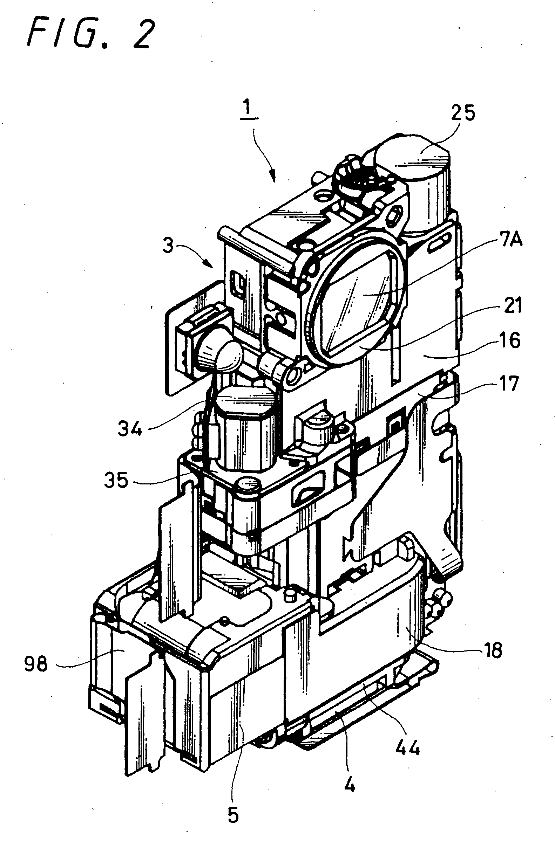

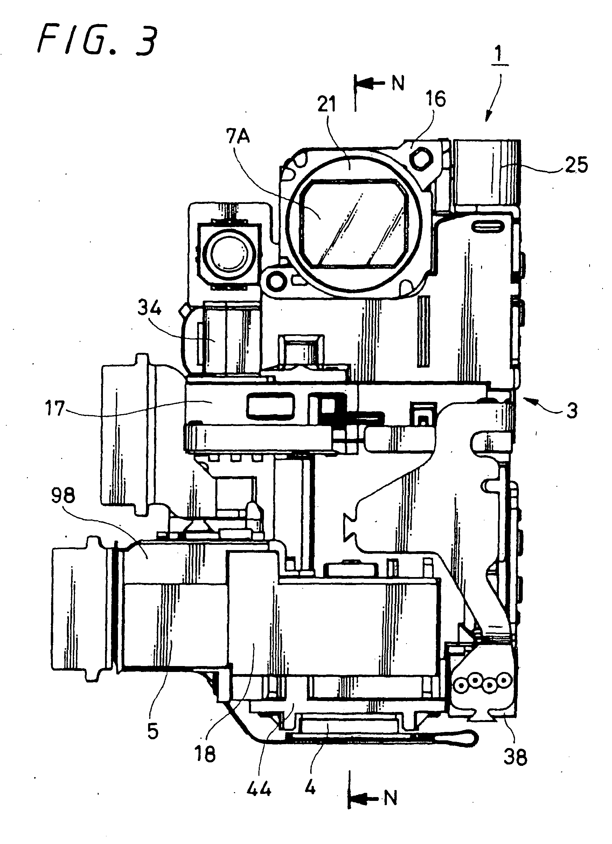

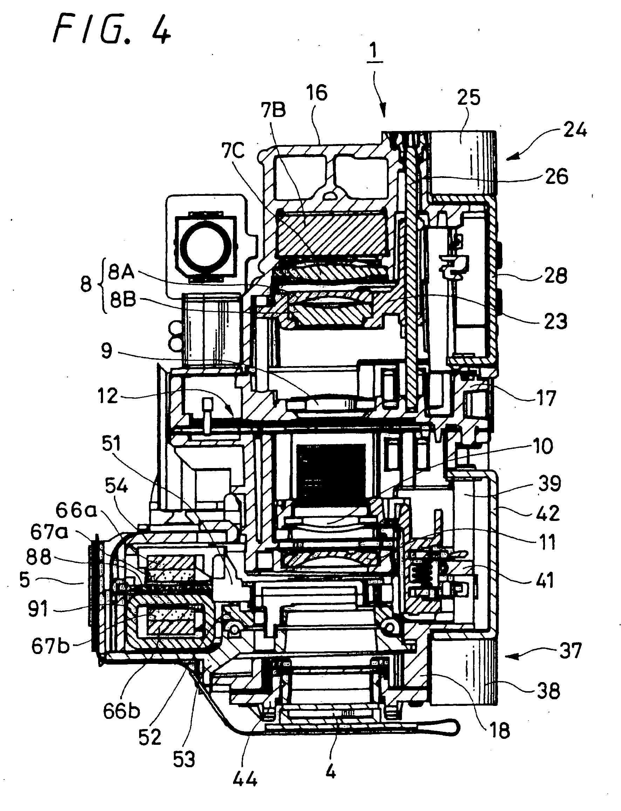

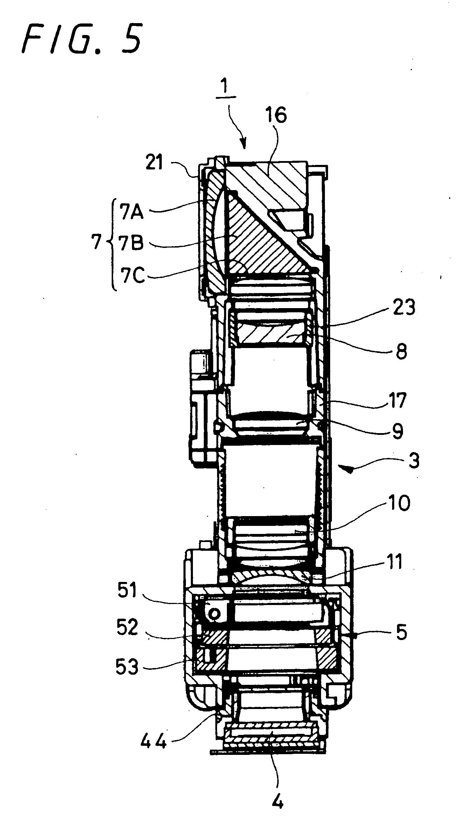

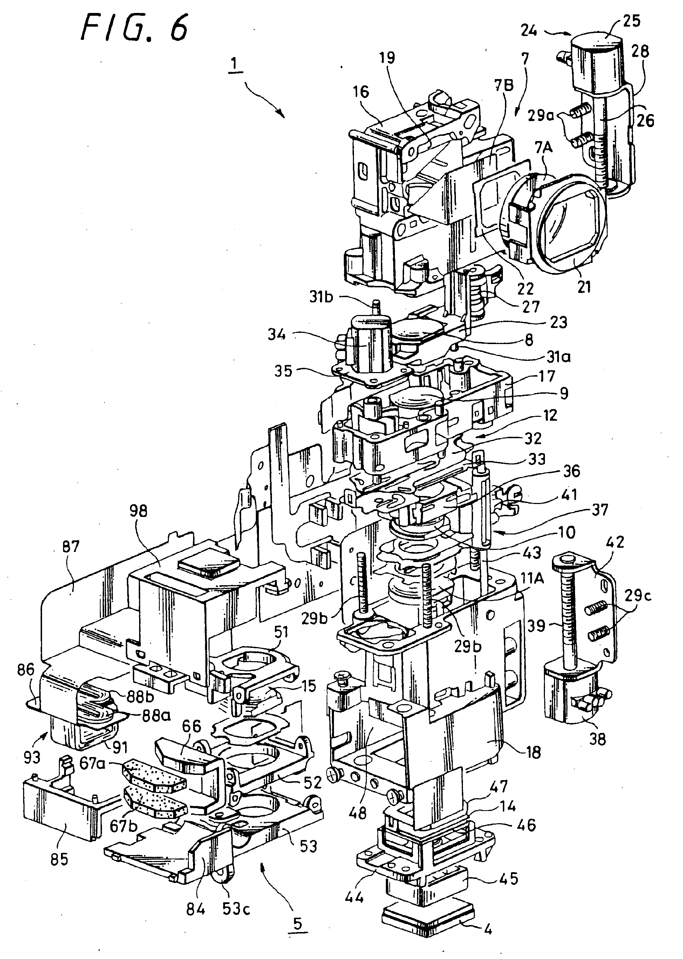

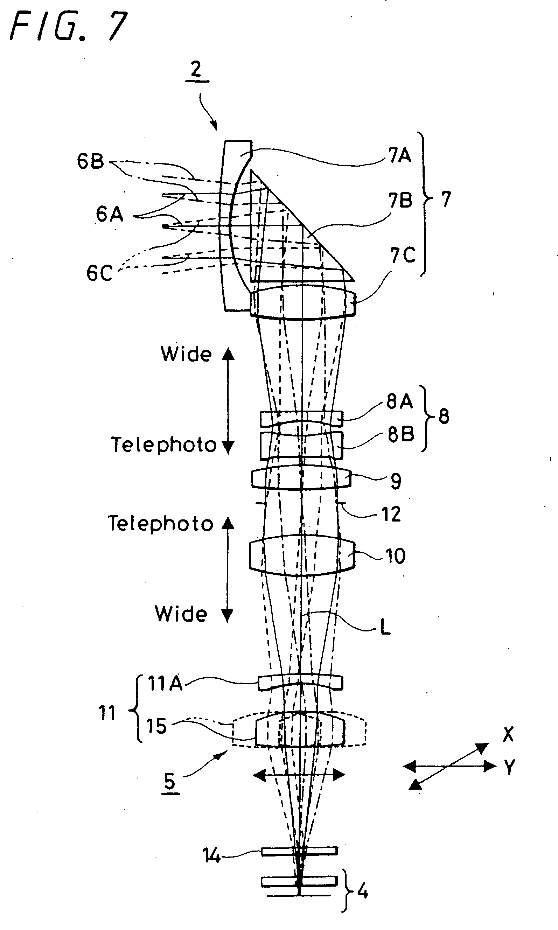

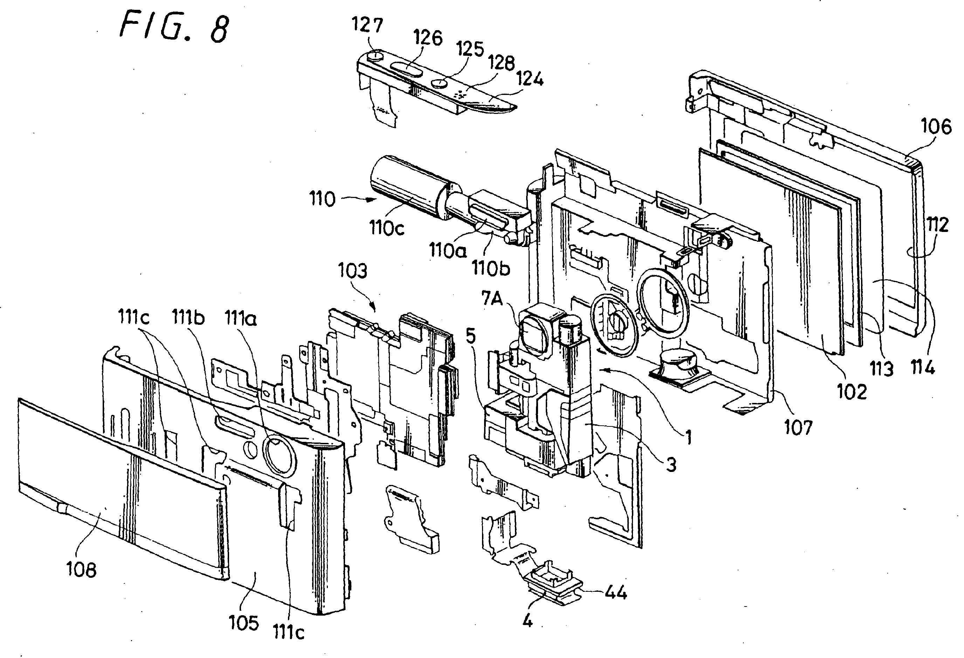

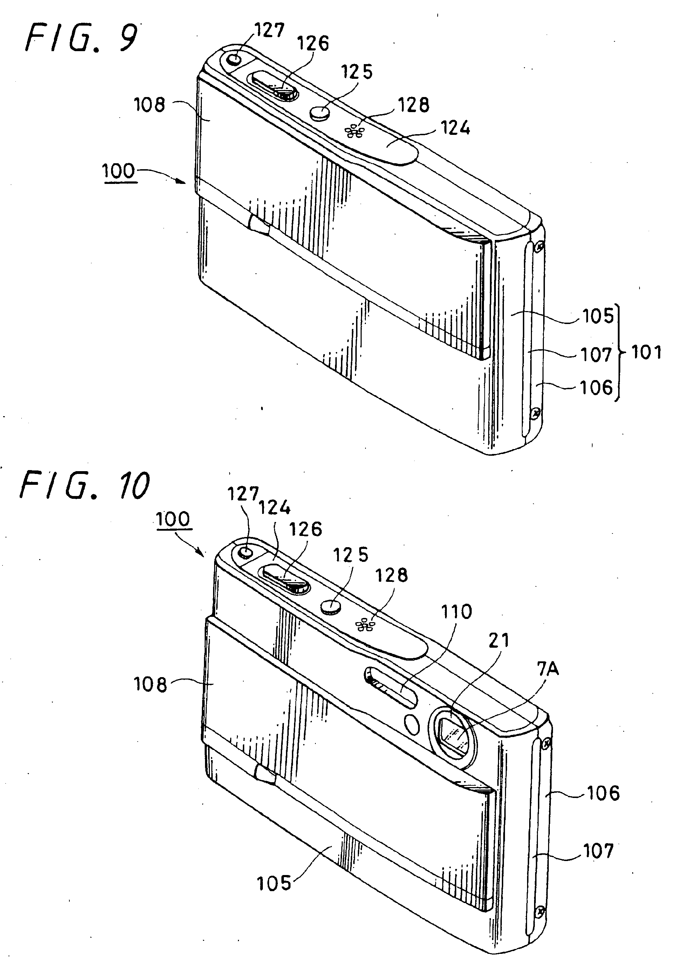

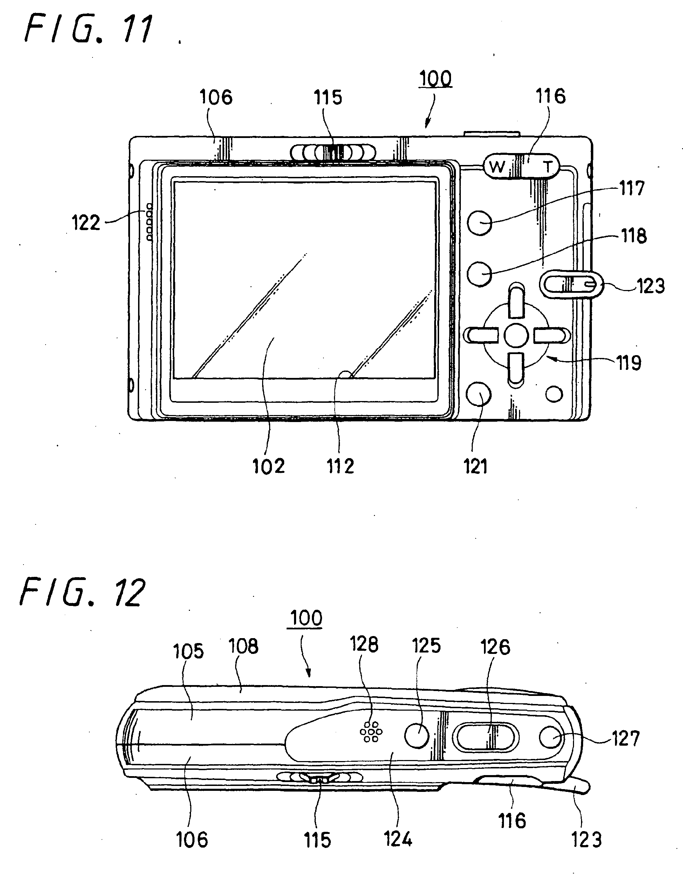

Embodiments of the present invention are described with reference to attached drawings. FIGS. 2 to 58 explain embodiments of the present invention. Specifically, FIG. 2 is a perspective view of a first embodiment of a lens device according to the present invention, as seen from the front side; FIG. 3 is a front view thereof; FIG. 4 is a vertical sectional view thereof; FIG. 5 is an N-N line sectional view of FIG. 3; FIG. 6 is an exploded perspective view thereof; and FIG. 7 is an explanatory diagram of a lens system. FIG. 8 is an exploded perspective view of a digital still camera representing a first example of an imaging apparatus according to an embodiment of the present invention; FIG. 9 is a perspective view of the digital still camera, as seen from the front side; FIG. 10 is a perspective view thereof in which an objective lens is exposed by moving a lens cover; FIG. 11 is a rear view thereof; and FIG. 12 is a plan view thereof.

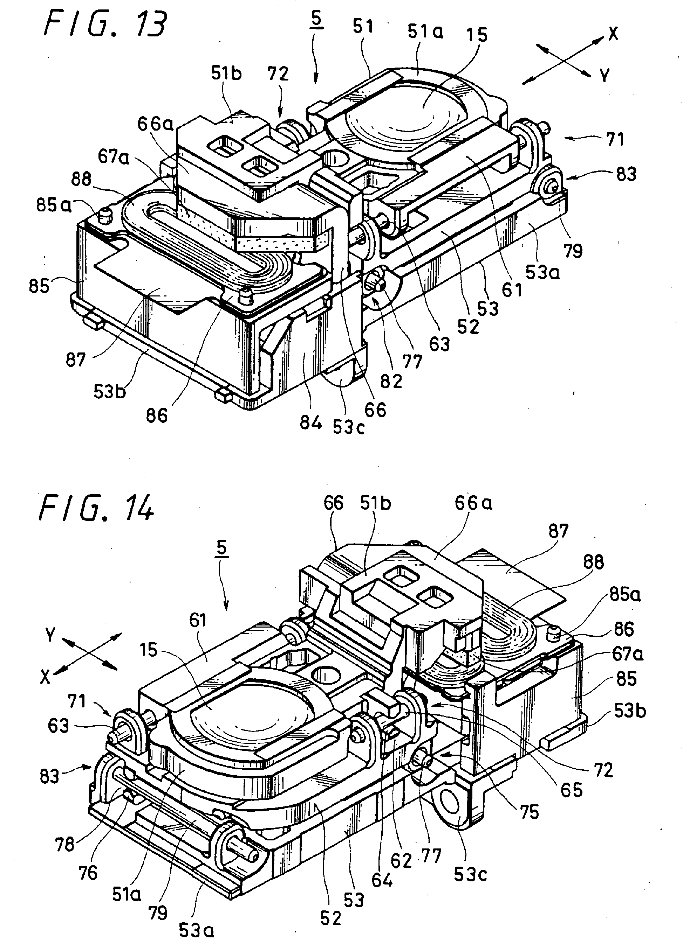

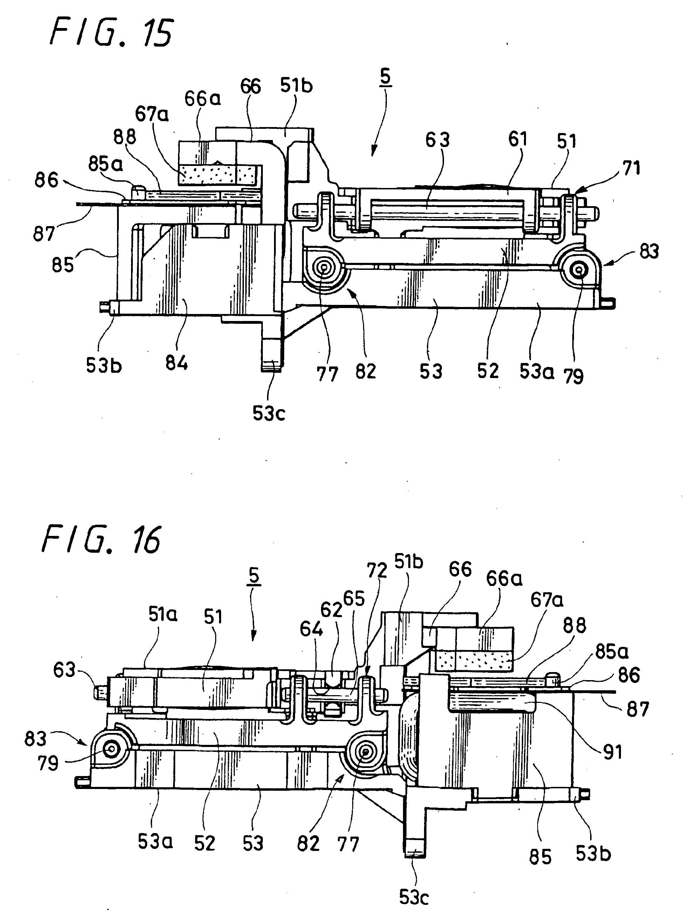

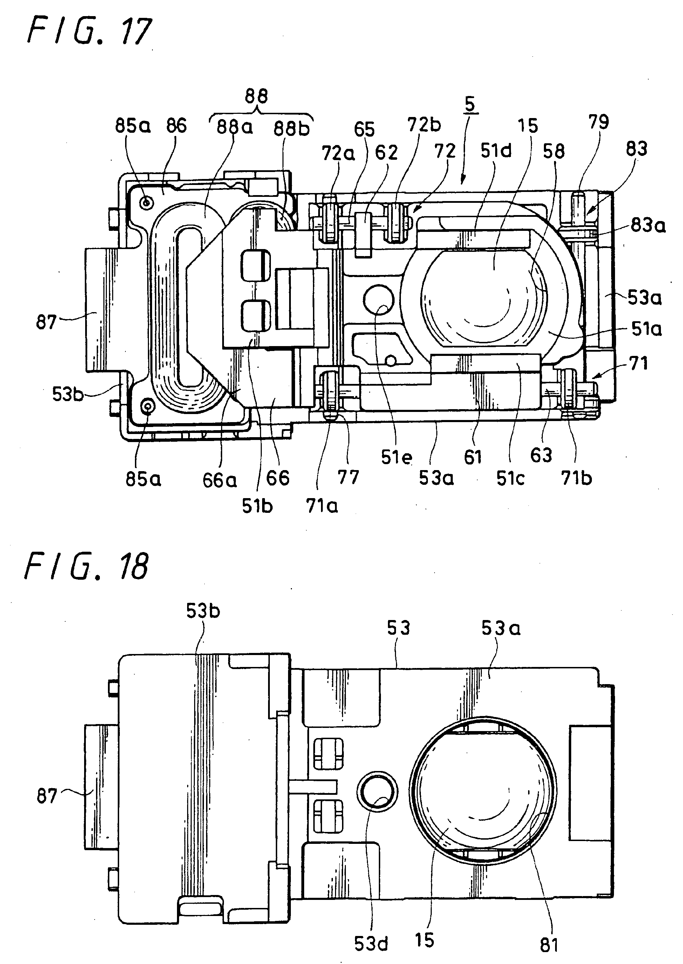

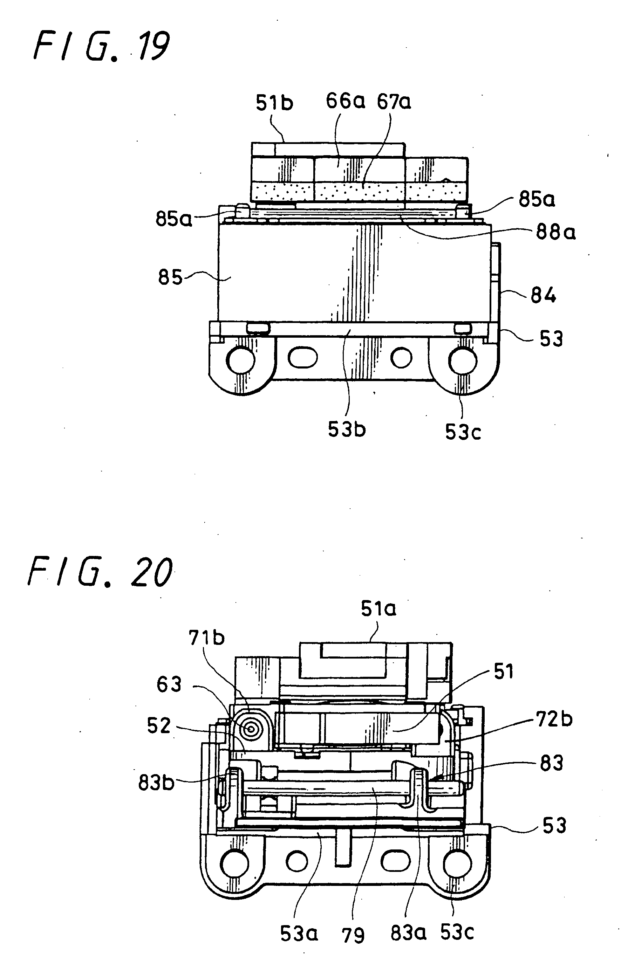

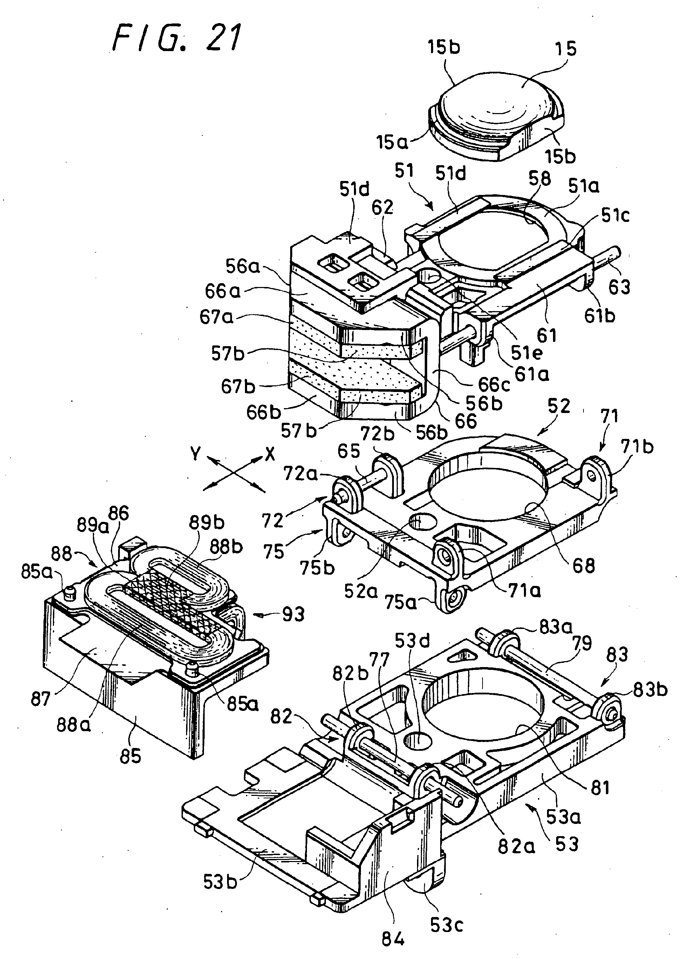

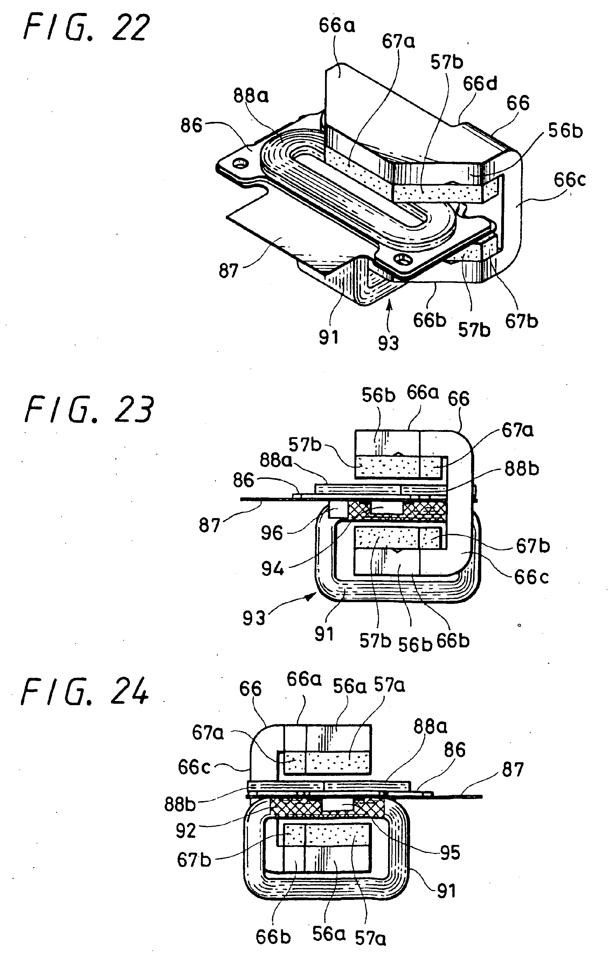

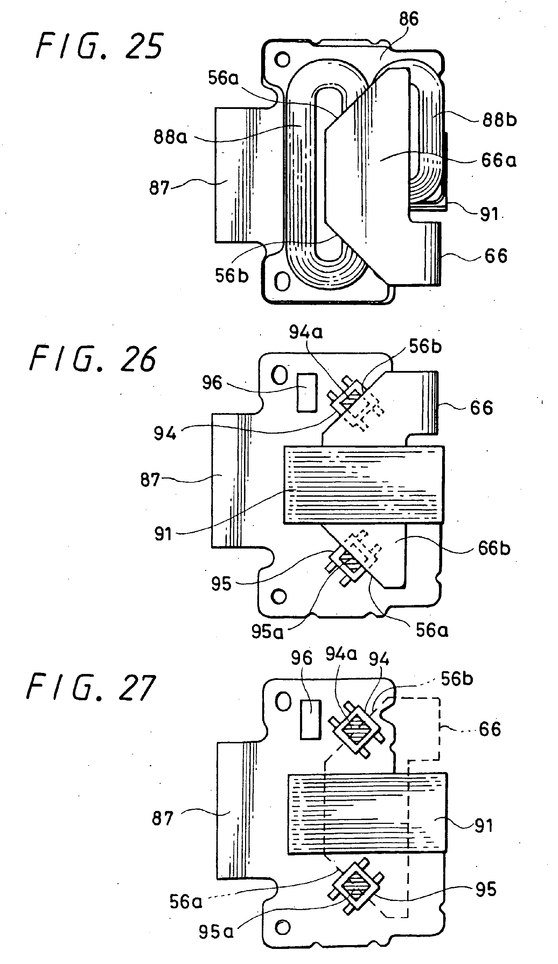

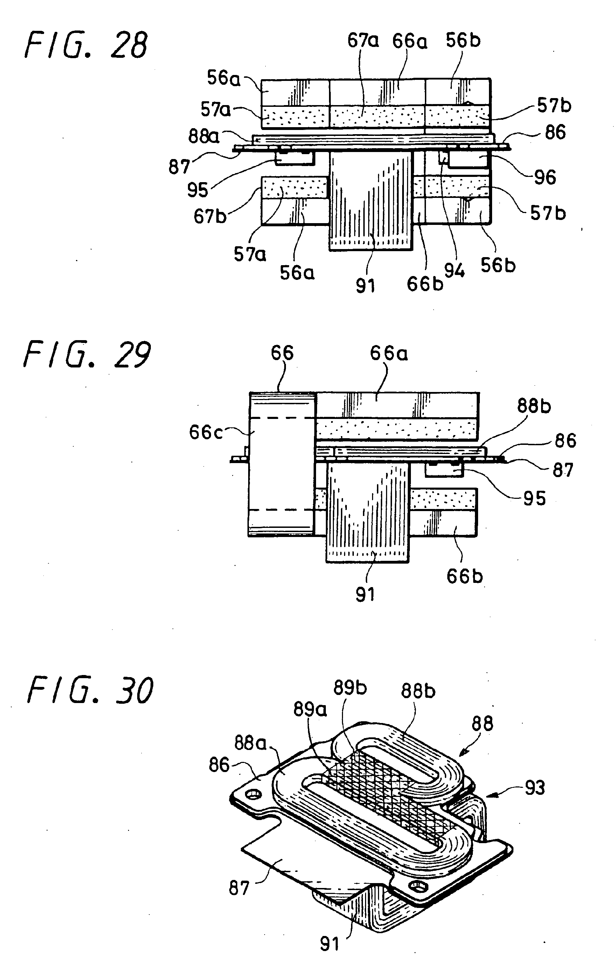

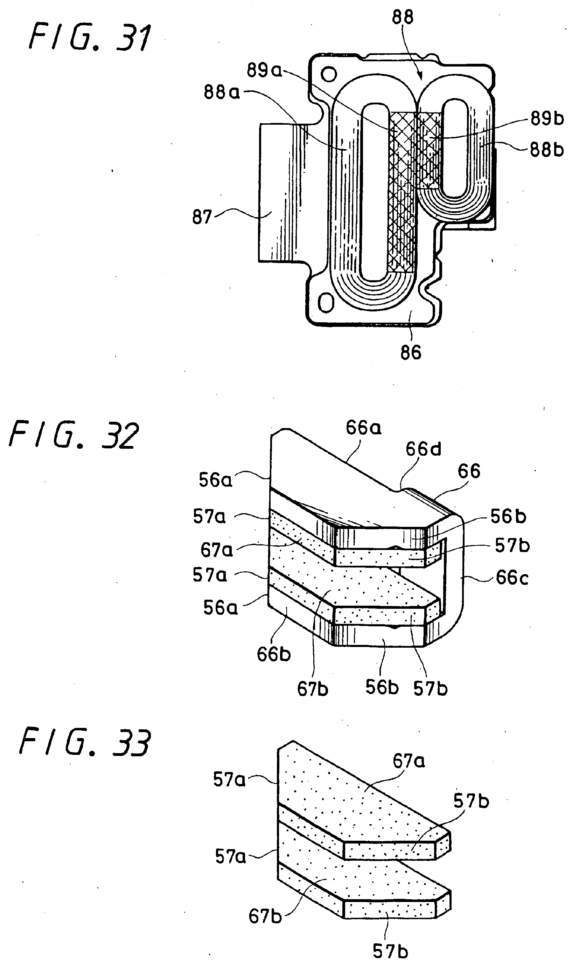

FIGS. 13 to 33 show a first embodiment of an image stabilizer according to the present invention, including a driving mechanism of a moving magnet system. Specifically, FIG. 13 is a perspective view of the image stabilizer, as seen from the front side; FIG. 14 is a perspective view thereof, as seen from the rear side; FIG. 15 is a front view thereof; FIG. 16 is a rear view thereof; FIG. 17 is a plan view thereof; FIG. 18 is a bottom view thereof; FIG. 19 is a left side view thereof; FIG. 20 is a right side view thereof; and FIG. 21 is an exploded perspective view thereof. FIG. 22 is a perspective view showing an electric actuator; FIG. 23 is a front view thereof; FIG. 24 is a rear view thereof; FIG. 25 is a plan view thereof; FIG. 26 is a bottom view thereof; FIG. 27 is a diagram explaining the arrangement of two hall elements; FIG. 28 is a left side view thereof; and FIG. 29 is a right side view thereof. FIG. 30 is a perspective view showing a coil assembly body; and FIG. 31 is a plan view thereof. FIG. 32 is a perspective view of a magnet and a yoke; and FIG. 33 is a perspective view of the magnet.

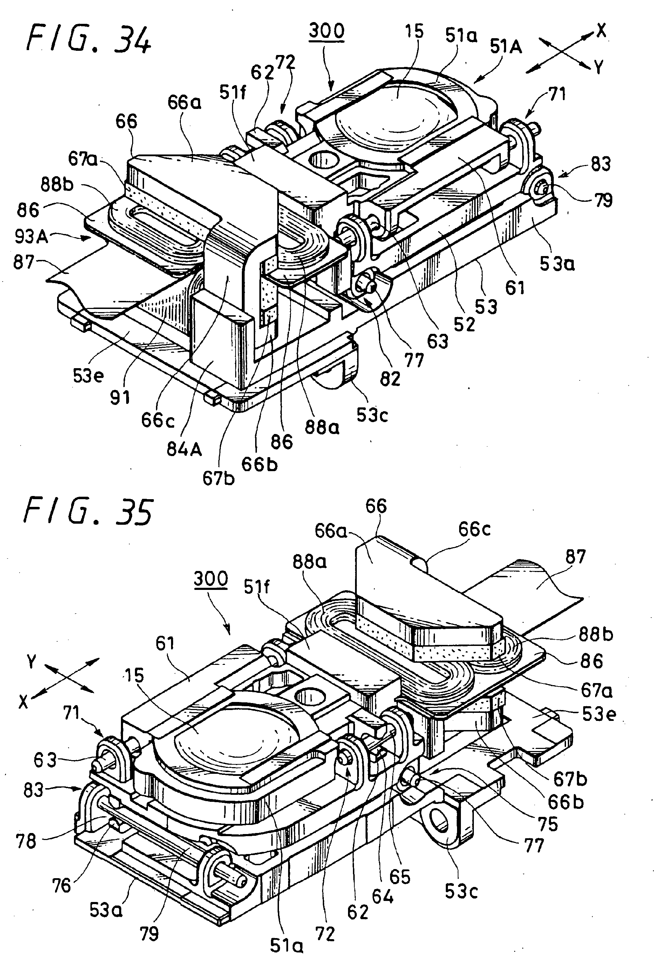

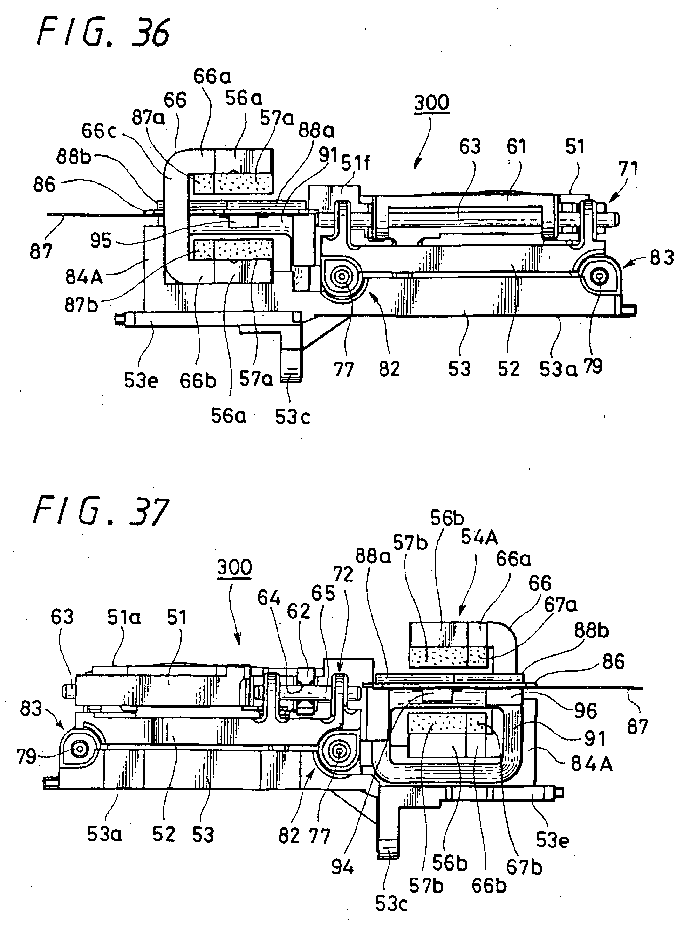

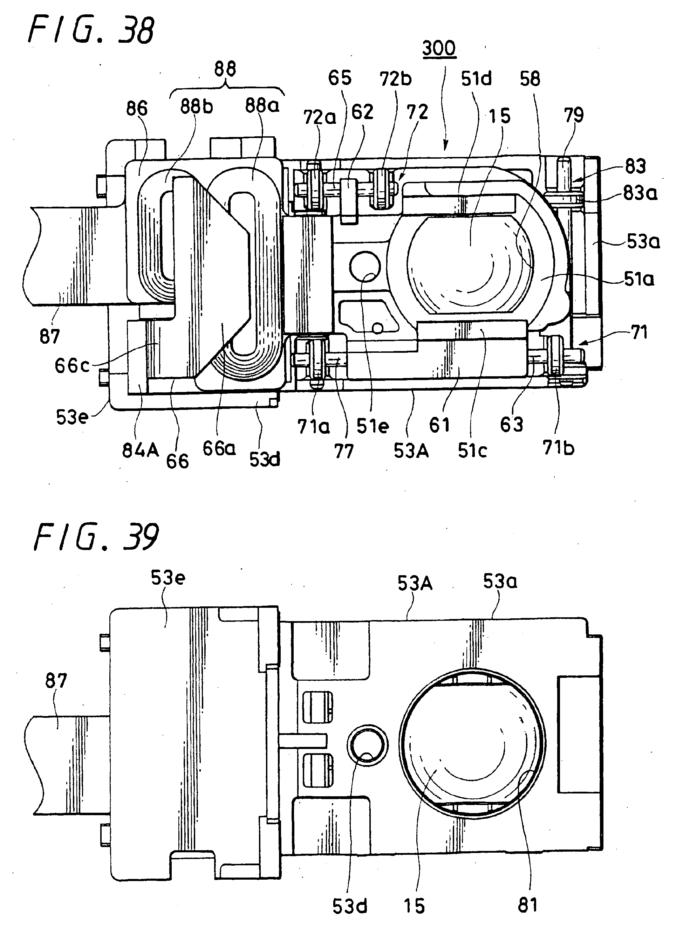

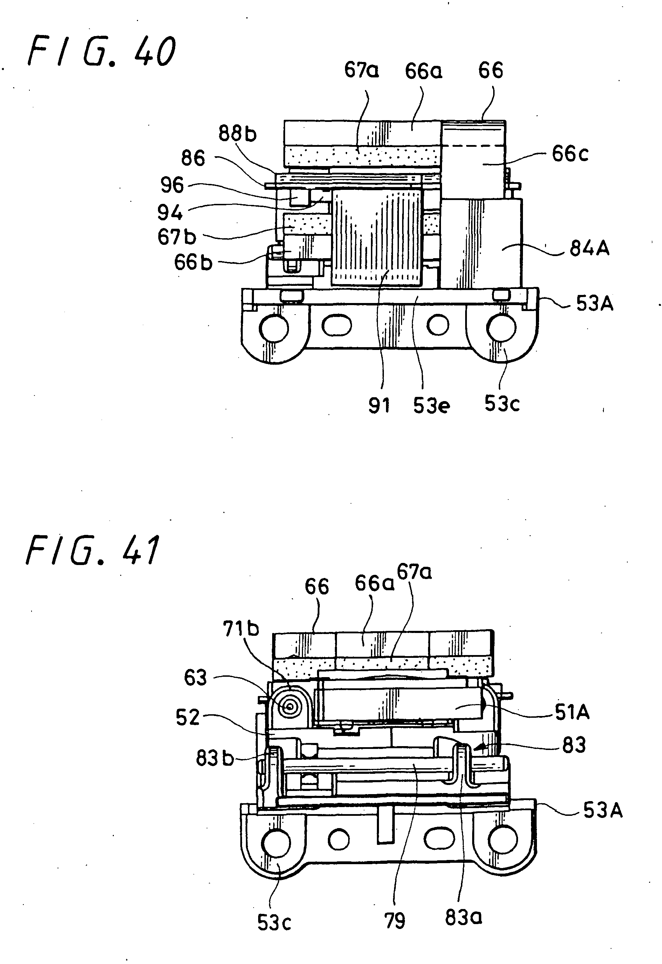

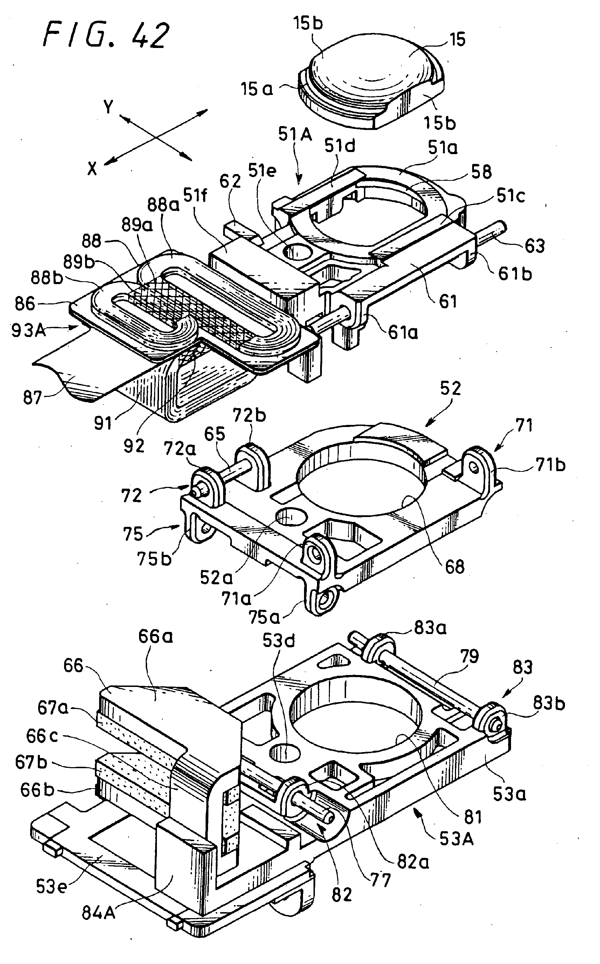

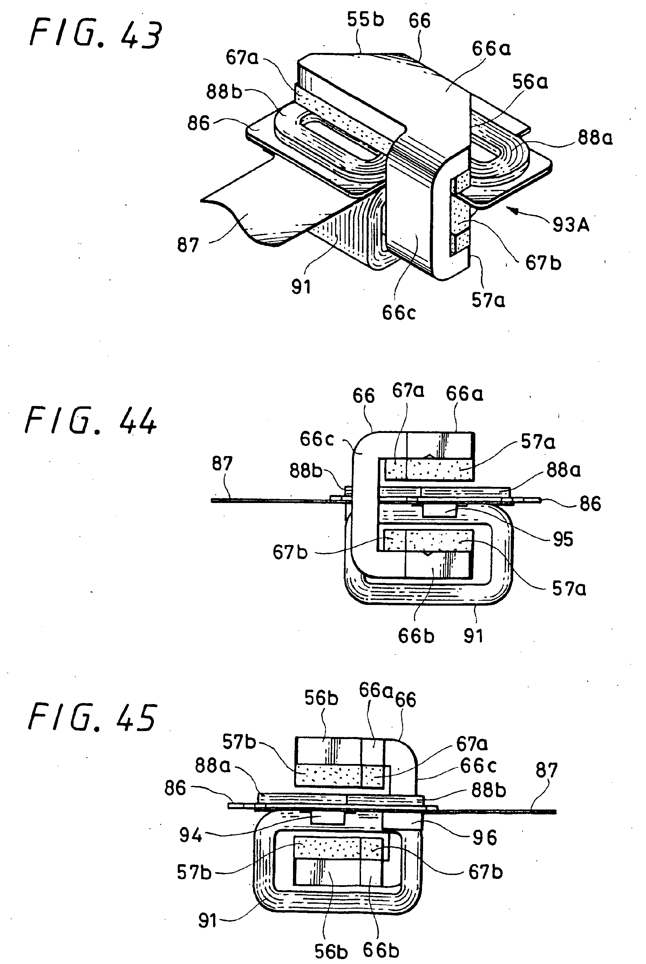

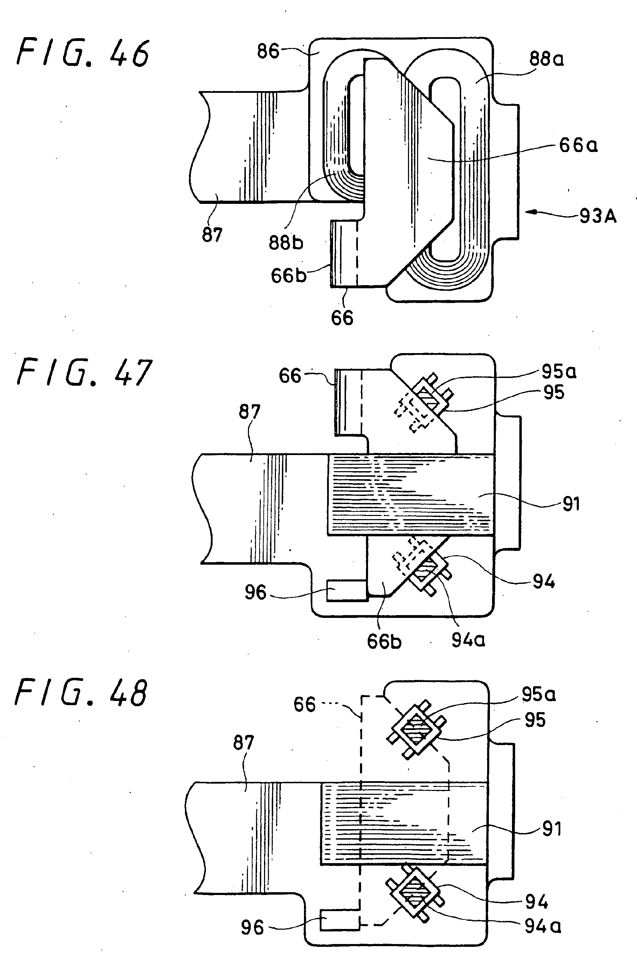

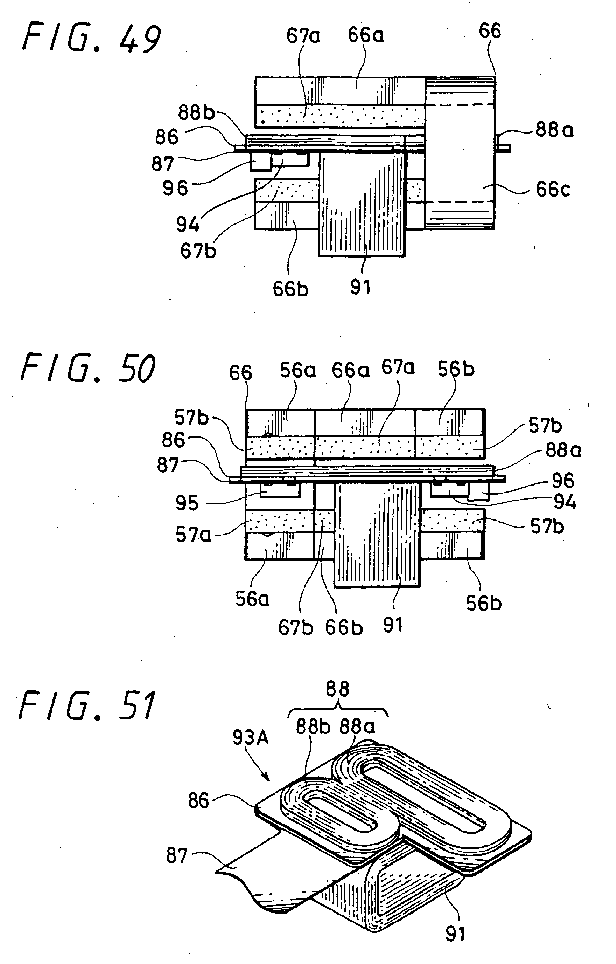

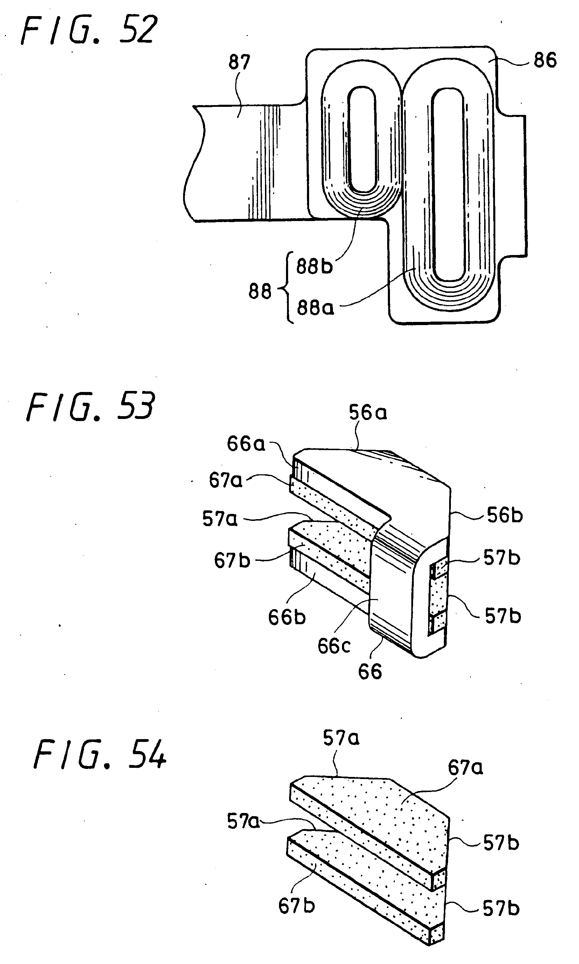

FIGS. 34 to 54 show a second embodiment of an image stabilizer according to the present invention, including a driving mechanism of a moving coil (moving hall element) system. Specifically, FIG. 34 is a perspective view of the image stabilizer, as seen from the front side; FIG. 35 is a perspective view thereof, as seen from the rear side; FIG. 36 is a front view thereof; FIG. 37 is a rear view thereof; FIG. 38 is a plan view thereof; FIG. 39 is a bottom view thereof; FIG. 40 is a left side view thereof; FIG. 41 is a right side view thereof; and FIG. 42 is an exploded perspective view. FIG. 43 is a perspective view showing an electric actuator; FIG. 44 is a front view thereof; FIG. 45 is a rear view thereof; FIG. 46 is a plan view thereof; FIG. 47 is a bottom view thereof; FIG. 48 is a diagram explaining the arrangement of two hall elements; FIG. 49 is a left side view thereof; and FIG. 50 is a right side view thereof. FIG. 51 is a perspective view showing a coil assembly body; and FIG. 52 is a plan view thereof. FIG. 53 is a perspective view of a magnet and a yoke; and FIG. 54 is a perspective view of the magnet.

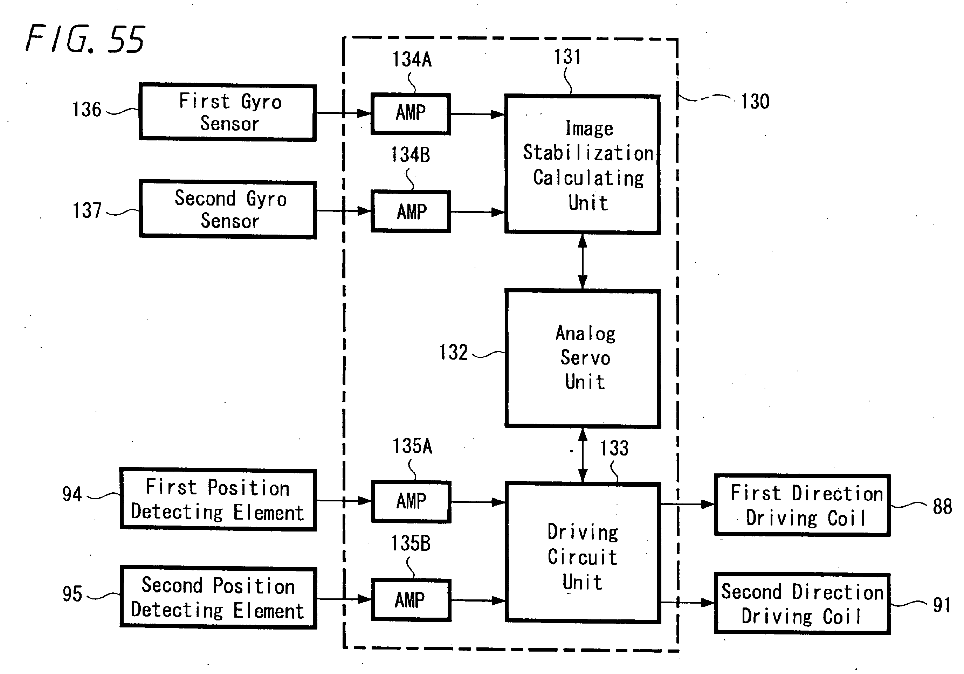

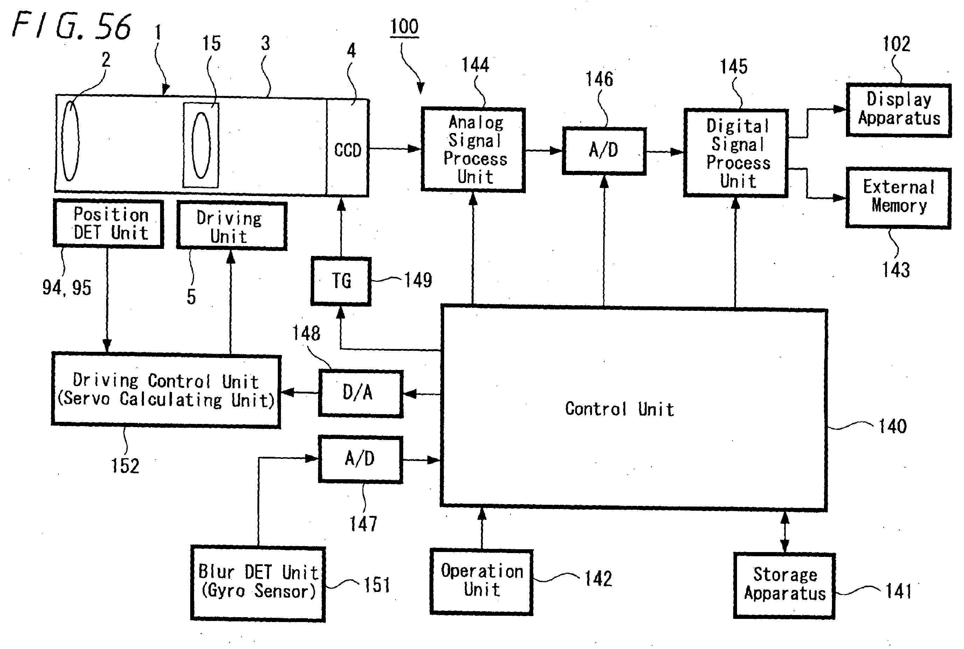

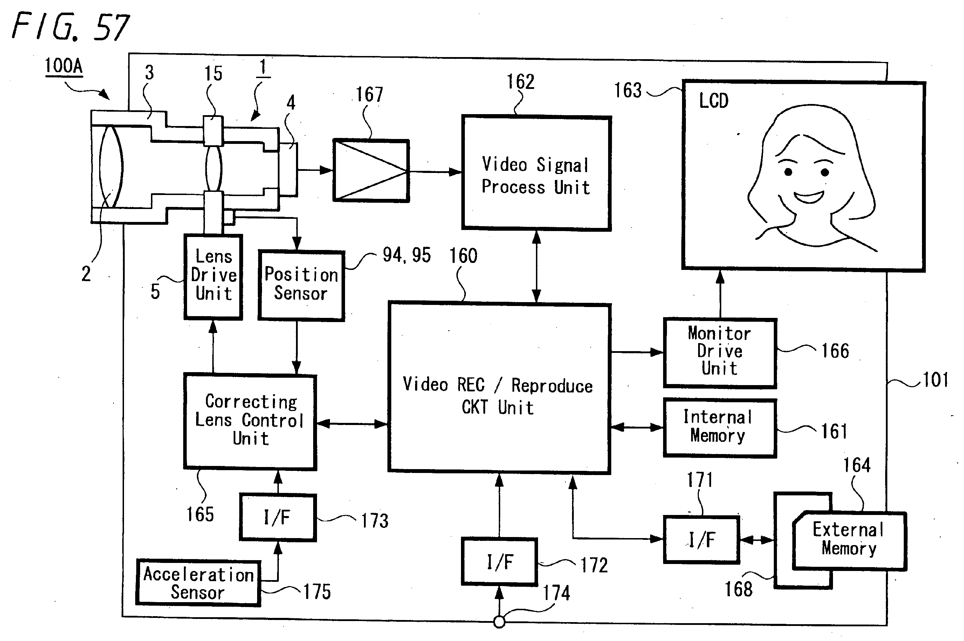

FIG. 55 is a block diagram for explaining a concept of control with an image stabilizer according to an embodiment of the present invention; FIG. 56 is a block diagram showing a first embodiment of a schematic configuration of an imaging apparatus according to the present invention; and FIG. 57 is a block diagram showing a second embodiment of a schematic configuration of an imaging apparatus. FIGS. 58A to 58E are a diagram for explaining a position-detecting mechanism according to an embodiment of the present invention.

FIGS. 2 to 6 show a first embodiment of a lens device of the present invention. The lens device 1 includes a lens system 2, a lens barrel 3, an imager 4, an image stabilizer 5 and the like. The lens system 2 has five-group lenses in which a plurality of lenses are disposed on the same optical axis L. The lens barrel 3 supports the lenses of the lens system 2 in a fixed or movable manner. The imager (for example, a CCD, CMOS or the like) 4 is arranged on the optical axis L of the lens system 2 and is fixed to the lens barrel 3. The image stabilizer 5 is attached to the lens barrel 3 and stabilizes images on the lens system 2.

As shown in FIG. 7, the lens system 2 of the lens device 1 is formed as a collapsible lens having a lens system formed of five-group lenses 7 to 11 in which five lens groups are disposed on the same optical axis L. Of the five-group lenses 7 to 11, the first-group lens 7 positioned at the front end includes: a first lens 7A which is an objective lens facing an object; a prism 7B which faces the objective lens 7A on the opposite side to the object; and a second lens 7C which faces the prism 7B. The prism 7B is formed of a triangular prism whose cross section is shaped to be an isosceles right triangle; one of the two sides which are adjacent to each other and rotationally displaced by 90° faces the objective lens 7A, and the other side faces the second lens 7C.

In the first-group lens 7, light passing through the objective lens 7A enters the prism 7B from one surface. The light is then reflected on a reflecting surface inclined by 45° with respect to the optical axis L and is made to advance in a direction that is bent by 90°. Subsequently, the light passes through the second lens 7C after outgoing from the other side; and advances toward a second-group lens 8 along the optical axis L. The second-group lens 8 includes a combination of a third lens 8A and a fourth lens 8B, and is formed to be movable on the optical axis L. Light passing through the second-group lens 8 enters a third-group lens 9.

The third-group lens 9 is formed of a fifth lens fixed to the lens barrel 3. Behind the third-group lens 9 is provided a fourth-group lens 10 formed of a sixth lens. Between the fourth-group lens 10 and the third-group lens 9 is provided an iris mechanism 12 capable of adjusting the amount of light which passes through the lens system 2. The fourth-group lens 10 is formed to be movable on the optical axis L. Behind the fourth group lens 10 is provided a fifth-group lens 11 formed of a seventh lens 11A and of a correcting lens 15 described later. Of the components of the fifth-group lens 11, the seventh lens 11A is fixed to the lens barrel 3, the correcting lens 15 is provided behind the seventh lens 11A in a movable manner, and further, an imager 4 is provided behind the correcting lens 15.

The second-group lens 8 and the fourth-group lens 10 are movable in the direction of the optical axis independently and separately along the optical axis L. By moving the second-group lens 8 and the fourth-group lens 10 in predetermined directions, zoom adjustment and focus adjustment can be performed. Specifically, at the time of zooming, by moving the second-group lens 8 and the fourth-group lens 10 from wide to telephoto, zoom adjustment is carried out. Further, at the time of focusing, by moving the fourth-group lens 10 from wide to telephoto, focus adjustment can be carried out.

The imager 4 is fixed to an imager adaptor and is attached to the lens barrel 3 by means of the imager adaptor. In front of the imager 4 is provided an optical filter 14, and between the optical filter 14 and the seventh lens 11A is provided the image stabilizer 5 having the correcting lens 15. The image stabilizer 5 that is later described in detail is provided for stabilizing captured images blurred by vibration of the lens system 2 or the like. In its normal state, the correcting lens 15 is installed such that the optical axis thereof coincides with the optical axis L of the lens system 2. When an image is blurred on the focusing plane of the imager 4 due to vibration of a camera body or the like, the image blurred on the focusing plane is stabilized by the image stabilizer 5 which moves the correcting lens 15 in two directions (a first direction X and second direction Y) perpendicular to the optical axis L.

As shown in FIGS. 2 to 6, the lens barrel 3 holding the lens system 2 of the above-described structure includes: an upper barrel 16, a middle barrel 17 and a lower barrel 18 which are combined and assembled by arranging one on top of the other in a vertical direction. The upper barrel 16 is formed of a casing having an opening window 19 provided in the upper part at the front and an opening provided in its lower surface. To the opening window 19 is attached the objective lens 7A of the first-group lens 7, and by means of a panel 21 attached to the front surface thereof, the objective lens 7A is attached to the upper barrel 16. Inside the upper barrel 16 are fixed the prism 7B provided on the rear surface of the objective lens 7A with a light-shielding plate 22 in between, and the second lens 7C provided on the lower surface of the prism 7B.

Further, inside the upper barrel 16 is provided a first movable holding frame 23 which is supported in a movable manner in the direction parallel with the optical axis L of the lens system 2 extended in the vertical direction of the lens barrel 3. In the first movable holding frame 23 is provided a through-hole which penetrates in the vertical direction, and the second-group lens 8 is fixed to the through-hole. The first movable holding frame 23 is formed to move forward and backward in the direction of the optical axis L of the lens system 2 within a predetermined range, by means of a zoom driving mechanism 24 attached to the upper barrel 16.

The zoom driving mechanism 24 includes: a zoom motor 25, a feed screw shaft 26 provided as a rotary shaft of the zoom motor 25, a feed nut 27 engaged with the feed screw shaft 26, and the like. The zoom motor 25 is fixed to a U-shaped first bracket 28, and both end portions of the feed screw shaft 26 which protrudes into one end thereof are supported in a freely turnable manner by the first bracket 28. The first bracket 28 is attached to the upper barrel 16 by means of a plurality of (two in this embodiment) fixed screws 29a.

In the installed state of the first bracket 28, the feed nut 27 is engaged with the feed screw shaft 26 in a slidable manner. The feed nut 27 is held by the first movable holding frame 23 with its movement in the direction, in which its screw grooves extend, being restricted. Further, two guide shafts 31a and 31b penetrate into the first movable holding frame 23 in a direction parallel with the optical axis L in a slidable manner. Ends of both the guide shafts 31a and 31b on one side are held by the upper barrel 16, and ends thereof on the other side are held by the middle barrel 17.

Thus, when the zoom motor 25 is driven, the rotating force of the feed screw shaft 26 is transmitted to the first movable holding frame 23 via the feed nut 27. At that time, the feed nut 27 moves in the axial direction with respect to the feed screw shaft 26 driven and rotating at the predetermined position. As a result, the first movable holding frame 23 moves in combination with the feed nut 27, thereby the second-group lens 8 selectively moving in a direction approaching the first-group lens 7 and in a direction approaching the third-group lens 9, in accordance with the rotating direction of the zoom motor 25. On this occasion, the first movable holding frame 23 holding the second-group lens 8 is guided in the direction parallel with the optical axis L by the two guide shafts 31a and 31b, and therefore can be moved on the optical axis L with accuracy.

The iris mechanism 12 provided below the third-group lens 9 fixed to and held by the middle barrel 17 includes: a diaphragm member 32 which freely adjusts the area of an aperture, a diaphragm supporting plate 33 which supports the diaphragm member 32 in a movable manner, a step motor 34 which opens and closes the diaphragm member 32, and the like. The step motor 34 is fixed to the side of the upper surface of the middle barrel 17, with a motor base 35 provided in between. The middle barrel 17 is fitted onto the lower barrel 18, and the upper barrel 16 is fitted onto the middle barrel 17; these three barrels are fastened and fixed with a plurality of (three in this embodiment) fixed screws 29b which penetrate these in a vertical direction, and integrally assembled, thereby forming the lens barrel 3.

The lower barrel 18 is formed of a casing which has openings in its upper surface, side surface and lower surface, and inside the casing is supported a second movable holding frame 36 in a movable manner in the vertical direction which is parallel with the optical axis L of the lens system 2. In the second movable holding frame 36 is provided a through-hole which penetrates in the vertical direction, and the fourth-group lens 10 is fixed to the through-hole. The second movable holding frame 36 is formed to move forward and backward in the direction of the optical axis L of the lens system 2 within a predetermined range, by means of a focus driving mechanism 37 attached to the lower barrel 18.

The focus driving mechanism 37 includes: a focusing motor 38, a feed screw shaft 39 provided as a rotary shaft of the focus motor 38, a feed nut 41 engaged with the feed screw shaft 39, and the like. The focusing motor 38 is fixed to a U-shaped second bracket 42, and both end portions of the feed screw shaft 39 which protrudes into one end thereof are supported in a freely turnable manner by the second bracket 42. The second bracket 42 is attached to the lower barrel 18 by means of a plurality of (two in this embodiment) fixed screws 29c.

In the installed state of the second bracket 42, the feed nut 41 is engaged with the feed screw shaft 39 in a slidable manner. The feed nut 41 is held by the second movable holding frame 36, with its movement restricted in the direction in which its screw grooves extend. Further, two guide shafts 43 (only one of which is shown in FIG. 6) penetrate into the second movable holding frame 36 in the direction parallel with the optical axis L in a slidable manner. Ends of the two guide shafts 43 on one side are held by the middle barrel 17, and ends thereof on the other side are held by the lower barrel 18.

Thus, when the focusing motor 38 is driven, the rotating force of the feed screw shaft 39 is transmitted to the second movable holding frame 36 via the feed nut 41. At that time, the feed nut 41 is moved in the axial direction with respect to the feed screw shaft 39 driven and rotated at the predetermined position. As a result, the second movable holding frame 36 moves in combination with the feed nut 41, thereby the fourth-group lens 10 selectively moving in a direction approaching the third-group lens 9 and in a direction approaching the fifth-group lens 11, in accordance with the rotation direction of the focusing motor 38. On this occasion, the second movable holding frame 36 holding the fourth-group lens 10 is guided in the a direction parallel with the optical axis L by the two guide shafts 43, and therefore can be moved on the optical axis L with accuracy.

The imager 4 is attached to the lower surface of the lower barrel 18 with an imager adaptor 44. The imager adaptor 44 is formed of a plate which has a square opening at the center; and to one surface thereof is integrally fixed the imager 4 using a fastening material such as adhesive, through a seal rubber 45 which is shaped like a square frame. On the other surface of the imager adaptor 44 is provided a light-shielding plate 46 in which optical filters 14 are arranged on top of each other, and these are fixed, being pressed by a filter pressing plate 47. With the optical filters 14 provided inside, the imager adaptor 44 is attached to the lower barrel 18 with fixed screws.

In an opening 48 made in a side surface of the lower barrel 18 is installed the image stabilizer 5 in a detachable manner. The image stabilizer 5 has a structure shown in FIGS. 13 to 33. The image stabilizer 5 includes a driving mechanism of a moving magnet system having the above-mentioned correcting lens 15, a first moving frame 51, a second moving frame 52, a fixed base board 53, an electric actuator 54, two hall elements (position detectors) 94 and 95, and the like.

The correcting lens 15 is attached to the first moving frame 51 and the first moving frame 51 is supported by the second moving frame 52 in a movable manner in a first direction X perpendicular to the optical axis L of the lens system 2. The second moving frame 52 is supported by the fixed base board 53 representing a first specific example of a supporting frame, in a movable manner in a second direction Y perpendicular to the optical axis L and perpendicular to the first direction X. The electric actuator 54 is a power source which moves the first moving frame 51 in the first direction X and moves the second moving frame 52 in the second direction Y. The two hall elements 94 and 95 for detecting the position of the correcting lens 15 are provided in relation to the electric actuator 54.

When the camera body which is described later is shaken or vibrated by hand-shake or the like, the correcting lens 15 stabilizes blurred image by its position being moved in the first direction X and/or in the second direction Y corresponding to the amount of image blur at that time. As shown in FIG. 21, on the outer peripheral edge of the correcting lens 15, a stepped portion 15a which is continuous in a circumferential direction is provided on one side. Further, two-surface width portions 15b and 15b are formed on the outer peripheral edge of the correcting lens 15 by providing a recess to two positions corresponding to the diameter direction. The correcting lens 15 is fixed to the first moving frame 51 representing a first specific example of a moving frame.

The first moving frame 51 includes: a ring-shaped lens fixed portion 51a into which the correcting lens 15 is fitted; a yoke fixed portion 51b which is formed continuously to one side of the lens fixed portion 51a, being folded into the form of a crank, and to which a yoke 66 described later is fixed; and the like. The lens fixed portion 51a has a shape corresponding to the shape of the correcting lens 15, and a stepped portion engaged with the stepped portion 15a of the correcting lens 15 is provided to the peripheral edge of a fitting hole 58 into which the correcting lens 15 is fitted. Further, the lens fixed portion 51a has two-surface width portions 51c and 51d corresponding to the two-surface width portions 15b of the correcting lens 15, and a yoke fixed portion 51b is continued to one side of the direction (first direction X) perpendicular to the direction (second direction Y) in which the two-surface width portions 51c and 51d are opposed.

On the outside of the two-surface width portions 51c and 51d of the lens fixed portion 51a are provided a first main bearing portion 61 and a first sub bearing portion 62. The first main bearing portion 61 has two bearing pieces 61a and 61b which are provided in the first direction X with a predetermined space in between, and a first main guide shaft 63 penetrates through those bearing holes in the first direction X. The first main guide shaft 63 is fixed to both bearing pieces 61a and 61b with pressure, and both the ends thereof protrude from the bearing pieces 61a and 61b to the outside. The first sub bearing portion 62 is provided with a bearing groove 64 made on its side. A first sub guide shaft 65 is engaged with the bearing groove 64 in a slidable manner (see FIG. 14).

Further, a yoke 66 constituting a part of the electric actuator 54 is fixed to the yoke fixed portion 51b of the first moving frame 51 by a fastening method using adhesive, fixed screws and the like. As shown in FIG. 32, the yoke 66 includes: an upper piece 66a and a lower piece 66b, which are parallel and opposed to each other with a predetermined space in between, and a joint piece 66c, which joins the upper and lower pieces 66a and 66b. The joint piece 66c is provided to one side of the longitudinal direction of the upper and lower pieces 66a and 66b, and a recess 66d into which a part of the yoke fixed portion 51b of the first moving frame 51 is inserted is formed continuously to the joint piece 66c.

The recess 66d of the yoke 66 is provided for the purpose of bringing a later-described coil assembly body 93 close to the correcting lens 15, and with the recess 66d, the electric actuator 54 can further be small-sized. Chamfers 56a and 56b having an inclined angle of 45°, which represent a specific example of an appropriate angle, with respect to the first direction X and the second direction Y are provided at both corners of the long side of each of the upper and lower pieces 66a and 66b of the yoke 66 on the opposite side to the joint piece 66c. The reason why the angles of these chamfers 56a and 56b have been set to 45° is that the amount of change in a magnetic flux density detected by the two hall elements 94 and 95 can be calculated conveniently. In this case, if the main surfaces of the two chamfers 56a and 56b are extended, the surfaces will intersect each other at an angle of 90°.

Therefore, the inclined angles of the chamfers 56a and 56b are not limited to 45° shown in this embodiment, but can be set to an arbitrary angle such as 40°, 35°, 30° or the like. In such cases, similar to the above-described case in which the inclined angles are set to 45°, the angle formed by intersecting the two chamfers 56a and 56b is selected to be 90°. Magnets 67a and 67b are fixed by adhesive to the inner surfaces of the upper and lower pieces 66a and 66b, respectively.

The two magnets 67a and 67b have approximately similar size and shape to those of the upper and lower pieces 66a and 66b of the yoke 66. Specifically, the two magnets 67a and 67b are formed of flat boards having an approximately similar size to the upper and lower pieces 66a and 66b; and each of the magnets 67a and 67b has two chamfers 57a and 57b having similar inclined angles to the chamfers 56a and 56b of the yoke 66 at corners on one side, at both ends in lengthwise direction. Thus, as shown in FIG. 32, in the state in which the magnets 67a and 67b are fixed to the inner surfaces of the upper and lower pieces 66a and 66b of the yoke 66, the edges of the chamfers 57a and 57b of the two magnets 67a and 67b are overlapped with the edges of the chamfers 56a and 56b of the upper and lower pieces 66a and 66b to be approximately on top of the other.

The two magnets 67a and 67b vertically opposed to each other and the yoke 66 constitute a magnetic circuit for the electric actuator 54. Specifically, in this embodiment, one magnetic circuit member including one yoke 66 and two magnets 67a and 67b functions as a magnetic circuit for a first electric actuator and also as a magnetic circuit for a second electric actuator.

As shown in FIG. 21, the second moving frame 52 is formed of a flat plate which is slightly wider than the first moving frame 51. The second moving frame 52 is assembled facing the first moving frame 51 so as to fit under it. At the position of the second moving frame 52 corresponding to the fitting hole 58 of the first moving frame 51 is provided a through-hole 68 which has approximately the same size as the fitting hole 58. On the upper surface of the second moving frame 52 is provided a second bearing portion for supporting the first moving frame 51 in a slidable manner in the first direction X.

The second bearing portion includes: a second main bearing portion 71 which supports the first main guide shaft 63 fixed to the first moving frame 51, in a freely slidable manner; and a second sub bearing portion 72 which supports the first sub guide shaft 65 in a fixed manner. In the state in which the first moving frame 51 has been fitted onto the second moving frame 52, the second main bearing portion 71 is provided in such a position capable of supporting both ends of the first main guide shaft 63. Specifically, the second main bearing portion 71 includes two bearing pieces 71a and 71b which support both ends of the first main guide shaft 63, and is provided on the upper surface of the second moving frame 52 so as to protrude upward.

The two bearing pieces 71a and 71b of the second main bearing portion 71 are formed apart from each other by the distance which is the total of the length of the first main bearing portion 61 in the first direction X and the length necessary for the first moving frame 51 to move in the first direction X. The two bearing pieces 71a and 71b are each provided with a bearing hole, and both ends of the first main guide shaft 63 are inserted in those bearing holes in a slidable manner.

Further, the second sub bearing portion 72 is provided at a position corresponding to the first sub bearing portion 62 in the state in which the first moving frame 51 is fitted onto the second moving frame 52. Specifically, the second sub bearing portion 72 includes two bearing pieces 72a and 72b which support both ends of the first sub guide shaft 65. The two bearing pieces 72a and 72b are each provided with a bearing hole, and both ends of the first sub guide shaft 65 are fixed to those bearing holes with pressure. The first sub guide shaft 65 is inserted in a freely slidable manner in the bearing groove 64 provided in the first sub bearing portion 62 of the first moving frame 51. The first sub guide shaft 65 and first main guide shaft 63 are so set that their shaft center lines become parallel to each other, and the first moving frame 51 is guided by both guide shafts 63 and 65 to be movable in the first direction X.

On the lower surface of the second moving frame 52 is provided a third bearing portion for supporting the second moving frame 52 in a slidable manner in the second direction Y perpendicular to the first direction X. The third bearing portion includes a third main bearing portion 75 and a third sub bearing portion 76. The third main bearing portion 75 is provided to one end of the second moving frame 52 in the first direction X, includes two bearing pieces 75a and 75b provided in the second direction Y with a predetermined space in between, and is provided on the lower surface of the second moving frame 52 in such a manner as to protrude downward. The two bearing pieces 75a and 75b are each provided with a bearing hole, and both ends of a second main guide shaft 77 which extends in the second direction Y are inserted in those bearing holes in a slidable manner.

Further, the third sub bearing portion 76 is provided at one side of the other end of the second moving frame 52 in the first direction X. The third sub bearing portion 76 is provided with a bearing groove 78 open to the lateral direction. A second sub guide shaft 79 extending in the second direction Y perpendicular to the first direction X is engaged with the bearing groove 78 in a slidable manner (see FIG. 14). Both the second main guide shaft 77 and second sub guide shaft 79 are fixed to the fixed base board 53, respectively. The fixed base board 53 shows a specific example of a supporting frame, and the second moving frame 52 is assembled facing the fixed base board 53 in such a manner as to fit over it.

As shown in FIG. 21, the fixed base board 53 includes a moving frame supporting portion 53a which corresponds to the second moving frame 52 in size, a coil fixed portion 53b continuously formed as one body with the moving frame supporting portion 53a, and the like. The moving frame supporting portion 53a is formed of a flat plate which has approximately the same size as the second moving frame 52, and the coil fixed portion 53b is continuous to one end of the moving frame supporting portion 53a in the first direction X. At the position of the moving frame supporting portion 53a corresponding to the through-hole 68 of the second moving frame 52 is provided a through-hole 81 which has approximately the same size as the through-hole 68. A fourth bearing portion which supports the second moving frame 52 in a slidable manner in the second direction Y by means of a second guide shaft is provided at both ends of the upper surface of the moving frame supporting portion 53a in the first direction X.

The fourth bearing portion includes a fourth main bearing portion 82 provided to one side in the first direction X, and a fourth sub bearing portion 83 provided to the other side in the first direction X. The fourth main bearing portion 82 includes two bearing pieces 82a and 82b provided in the second direction Y with a predetermined space in between, and is provided on the upper surface of the moving frame supporting portion 53a so as to protrude upward. The two bearing pieces 82a and 82b are each provided with a bearing hole, and the second main guide shaft 77 are pressed into those bearing holes to be fixed at two positions in the middle in its axial direction. Thus, both ends of the second main guide shaft 77 protrude to the outside of the two bearing pieces 82a and 82b, respectively.

The two bearing pieces 75a and 75b of the third main bearing portion 75 provided on the second moving frame 52 are fitted to the protruding portions at both ends of the second main guide shaft 77 in a slidable manner. The two bearing pieces 75a and 75b are apart from each other by the distance which is the total of the length between the two bearing pieces 82a and 82b and the length necessary for the second moving frame 52 to move in the second direction Y. Therefore, the third main bearing portion 75 of the second moving frame 52 is supported in a movable manner outside the two bearing pieces 82a and 82b, with respect to the second main guide shaft 77 fixed to the fourth main bearing portion 82 of the fixed base board 53.

Further, the fourth sub bearing portion 83 includes two bearing pieces 83a and 83b provided in the second direction Y with a predetermined space in between, and is provided on the upper surface of the moving frame supporting portion 53a so as to protrude upward. The two bearing pieces 83a and 83b are each provided with a bearing hole, and the second sub guide shaft 79 is pressed into those bearing holes to be supported at both the ends thereof fixed in its axial direction. Between those two bearing pieces 83a and 83b, the bearing groove 78 of the third sub bearing portion 76 provided on the second moving frame 52 is engaged with the second sub guide shaft 79 in a slidable manner. Therefore, the third sub bearing portion 76 may be moved by a predetermined distance in the second direction Y between the two bearing pieces 83a and 83b, guided by the second sub guide shaft 79.

The coil fixed portion 53b of the fixed base board 53 is formed of a roughly square flat part which has a supporting wall 84 protruding upward, and the supporting wall 84 is provided on one side in the second direction Y. A coil supporting stand 85 is fixed to the coil fixed portion 53b, and a coil assembly body 93 is attached to the coil supporting stand 85. As shown in FIGS. 13 to 16, the coil supporting stand 85 is provided for keeping the coil assembly body 93 at a predetermined height, and is formed as a supporting member the front shape of which is L-shaped. The coil supporting stand 85 is mounted on the coil fixed portion 53b with one side portion thereof being supported by the supporting wall 84, and is integrally fixed to the fixed base board 53 by a fastening method using adhesive, fixed screws or the like. On the lower surface of the fixed base board 53 is provided an attachment boss portion 53c for fixing it to the lens barrel 3.

The upper surface of the coil supporting stand 85 is formed as a plane surface, and two position-determining projections 85a and 85a for determining the position of a flexible reinforcing plate 86 are provided on the upper surface. The two position-determining projections 85a and 85a are disposed in the second direction Y with a predetermined space in between, and the flexible reinforcing plate 86 is fixed on the upper surface of the coil supporting stand 85. A flexible printed circuit board 87 with predetermined electric circuits printed on its lower surface is fixed to the flexible reinforcing plate 86 using adhesive tape.

A flat coil 88 wound to have a planar shape showing a specific example of a first coil is installed on the upper surface of the flexible reinforcing plate 86, and the coil is connected to a predetermined wiring pattern provided on the lower surface of the flexible printed circuit board 87. As shown in FIG. 30, 31 and other figures, the flat coil 88 is formed of two elliptical coil portions 88a and 88b disposed side by side. The two coil portions 88a and 88b are approximately equal in length in the widthwise direction, but are different in length in the lengthwise direction. The flexible reinforcing plate 86 having the flat coil 88 is fixed on the upper surface on one end of the flexible printed circuit board 87, with both coil portions 88a and 88b extending lengthwise in the direction substantially perpendicular to the direction in which the flexible printed circuit board 87 extends. The reason why the two coil portions 88a and 88b have different lengths from each other is as follows. Specifically, with the joint piece 66c of the yoke 66 to be placed on the outside of the short coil portion 88b, the whole of the electric actuator 54 can be small-sized, while the area of the flat coil 88 on the flat surface side is large and the electric actuator 54 comes close to the correcting lens 15.

The two coil portions 88a and 88b are formed by winding one coil wire. The direction of winding the coil wire is set such that when power is supplied, an electric current flows in the same direction at thrust-generating portions 89a and 89b extending straight on the long side adjacent to each other in the widthwise direction. Respective coil portions 88a and 88b of the flat coil 88 are fixed to the flexible reinforcing plate 86 by adhesive with the lengthwise direction of the two coil portions 88a and 88b being directed to the second direction Y. Thus, when an electric current is applied to the two coil portions 88a and 88b, magnetic force generated by the magnets 67a and 67b acts in a direction perpendicular to the flat coil 88. Therefore, force directed toward the first direction X works on the magnets 67a and 67b according to Fleming's left-hand rule.

Further, a cylindrical coil 91 showing a specific example of a second coil is installed under the flexible reinforcing plate 86. Both ends of the cylindrical coil 91 are electrically connected to a predetermined wiring pattern provided on the lower surface of the flexible printed circuit board 87. As shown in FIGS. 22 to 24 and other figures, the cylindrical coil 91 is provided with a rectangular space portion at its center so that it becomes a rectangular cylindrical body as a whole, and is formed into the shape of an angular cylinder by winding coil wire by a predetermined amount so that it has a predetermined thickness in the direction of a stack. A thrust-generating portion 92 of the cylindrical coil 91 is fixed to the flexible printed circuit board 87 by a fastening mechanism using adhesive, with the coil wire extending direction being directed to the first direction X. (see FIG. 24)

The lower piece 66b of the yoke 66 and the lower magnet 67b integrally fixed thereto are inserted in the space portion at the center of the cylindrical coil 91. Thus, when an electric current is applied to the cylindrical coil 91, magnetic force generated by the magnets 67a and 67b acts in the direction perpendicular to the thrust-generating portion 92, and so force directed to the second direction Y acts on the magnets 67a and 67b, according to Fleming's left-hand rule. The flexible reinforcing plate 86, the flexible printed circuit board 87, the flat coil 88 and the cylindrical coil 91 constitute the coil assembly body 93.

FIGS. 22 to 29 show the electric actuator 54 including the coil assembly body 93, the yoke 66 and the two magnets 67a and 67b described above. Of the components of the electric actuator 54, the yoke 66, the two magnets 67a and 67b and the flat coil 88 constitute a first electric actuator which moves the correcting lens 15 in the first direction X by means of the first moving frame 51. The first main bearing portion 61 and sub bearing portion 62 of the first moving frame 5, the first main guide shaft 63 and sub guide shaft 65, and the second main bearing portion 71 and sub bearing portion 72 constitute a first guide which guides the correcting lens 15 in the first direction X perpendicular to the optical axis L of the lens device 1 by means of the first moving frame 51.

Further, the yoke 66, the two magnets 67a and 67b and the cylindrical coil 91 constitute a second electric actuator which moves the correcting lens 15 in the second direction Y by means of the second moving frame 52. The third main bearing portion 75 and sub bearing portion 76 of the second moving frame 52, the second main guide shaft 77 and sub guide shaft 79, and the fourth main bearing portion 82 and sub bearing portion 83 constitute a second guide which guides the correcting lens 15 in the second direction Y perpendicular to the optical axis L of the lens device 1 and perpendicular to the first direction X by means of the second moving frame 52.

As described above, in this embodiment, one magnetic circuit member having one yoke 66 and two magnets 67a and 67b serves as a magnetic circuit for the first electric actuator and a magnetic circuit for the second electric actuator. Therefore, since there is no need to provide a magnetic circuit member for each electric actuator, the number of parts can be reduced to that extent and the whole of the device can be small-sized with a simplified structure.

Further, as shown in FIGS. 27 to 29, to the lower surface of the flexible reinforcing plate 86 are attached a first hall element 94, a second hall element 95, and a thermistor 96 showing a specific example of a temperature detector. The first hall element 94 detects the position of the correcting lens 15 in the first direction X, by means of the first moving frame 51. Further, the second hall element 95 detects the position of the correcting lens 15 in the second direction Y, by means of the second moving frame 52. The first hall element 94 is provided at one side of the cylindrical coil 91, and the second hall element 95 is provided at the other side of the cylindrical coil 91.

The first hall element 94 and second hall element 95 detect the strength of the magnetic force of the lower magnet 67b at predetermined positions, and output detection signals in accordance with the strength of the magnetic force. As shown in FIG. 27, the first hall element 94 is installed such that its detecting portion 94a is placed in a position approximately overlapped with the edges of the chamfers 56b on one side of the two magnets 67a and 67b in an vertical direction, and such that the detecting portion is attached to face the magnetic force detecting direction perpendicular to the direction in which the edges extend (that is, face the direction which forms an angle of 45° with the direction in which the cylindrical coil 91 extends). The second hall element 95 is installed such that its detecting portion 95a is placed in a position approximately overlapped with the edges of the chamfers 56a on the other side of the two magnets 67a and 67b in an vertical direction, and such that the detecting portion is attached to face the magnetic force detecting direction perpendicular to the direction in which the edges extend (that is, face the direction which forms an angle of 45° with the direction in which the cylindrical coil 91 extends, on the opposite side).

Based upon the detection signals supplied from the two hall elements 94 and 95, a control unit calculates by operation and outputs the position of the correcting lens 15 with respect to the first direction X and second direction Y. Further, the thermistor 96 detects the temperature in the vicinity of the coil assembly body 93, and when the temperature in the vicinity thereof has risen to a predetermined value or above, temperature correction is performed in addition to stabilizing images blurred by camera shake, a vibration or the like. The relative position relationship between the first hall element 94 and second hall element 95, and the magnets 67a and 67b, and the magnetic flux density detected at that time are later explained in detail.

The image stabilizer 5 having the above-mentioned structure is, for example, assembled as follows. First, as shown in FIGS. 30 and 31, the flat coil 88 is fixed to one surface of the flexible reinforcing plate 86, and the cylindrical coil 91 is fixed to the opposite surface to which the flexible printed circuit board 87 is connected. Thus, the coil assembly body 93 in which the flexible reinforcing plate 86 and the two coils 88 and 91 are joined is formed.

As shown in FIGS. 22 to 29, the lower piece 66b of the yoke 66 is inserted into the hole of the cylindrical coil 91 of the coil assembly body 93 from the lateral direction, and the lower magnet 67b fixed to the inner surface of the lower piece 66b is opposed to the thrust-generating portion 92 of the cylindrical coil 91. At the same time, the upper magnet 67a is opposed to the upper surface of the flat coil 88. Thus, the thrust-generating portions 89a and 89b of the flat coil 88 and the thrust-generating portion 92 of the cylindrical coil 91 are held between the upper and lower magnets 67a and 67b, thereby constituting the electric actuator 54. The flexible reinforcing plate 86 of the electric actuator 54 is mounted on the upper surface of the coil supporting stand 85, and is positioned using the two position-determining projections 85a and 85a, as shown in FIG. 21. Then, the flexible reinforcing plate 86 is fixed on the coil supporting stand 85 with adhesive.

Next, the second moving frame 52 faces the moving frame supporting portion 53a of the fixed base board 53 from above, and the two bearing pieces 82a and 82b of the fourth main bearing portion 82 are positioned between the two bearing pieces 75a and 75b of the third main bearing portion 75. The third sub bearing portion 76 is positioned between the two bearing pieces 83a and 83b of the fourth sub bearing portion 83. Subsequently, the second main guide shaft 77 penetrates through the bearing holes of the four bearing pieces 75a, 75b, 82a and 82b of the third main bearing portion 75 and fourth main bearing portion 82. On this occasion, the second main guide shaft 77 is pressed into the fourth main bearing portion 82 to be fixed, but is slidable on the third main bearing portion 75.

Further, the second sub guide shaft 79 penetrates through the bearing holes of the two bearing pieces 83a and 83b of the fourth sub bearing portion 83 and through the bearing groove 78 of the third sub bearing portion 76. On this occasion, the second sub guide shaft 79 is pressed into the fourth sub bearing portion 83 to be fixed, but is slidable on the third sub bearing portion 76. Thus, the second moving frame 52 can move with respect to the fixed base board 53 by a predetermined distance in the second direction Y, namely, can move by the length obtained by subtracting the distance between the outer surfaces of the two bearing pieces 82a and 82b of the fourth main bearing portion 82 from the distance between the inner surfaces of the two bearing pieces 75a and 75b of the third main bearing portion 75.

Next, the lens fixed portion 51a of the first moving frame 51 faces the second moving frame 52 from above, and the two bearing pieces 61a and 61b of the first main bearing portion 61 are positioned between the two bearing pieces 71a and 71b of the second main bearing portion 71. The first sub bearing portion 62 is positioned between the two bearing pieces 72a and 72b of the second sub bearing portion 72. Subsequently, the first main guide shaft 63 penetrates through the bearing holes of the four bearing pieces 61a, 61b, 71a and 71b of the first main bearing portion 61 and second main bearing portion 71. On this occasion, the first main guide shaft 63 is pressed into the first main bearing portion 61 to be fixed, but is slidable on the second main bearing portion 71.

Further, the first sub guide shaft 65 penetrates through the bearing holes of the two bearing pieces 72a and 72b of the second sub bearing portion 72 and the bearing groove 64 of the first sub bearing portion 62. On this occasion, the first sub guide shaft 65 is pressed into the second sub bearing portion 72 to be fixed, but is slidable on the first sub bearing portion 62. Thus, the first moving frame 51 can move with respect to the second moving frame 52 by a predetermined distance in the first direction X, namely, can move by the length obtained by subtracting the distance between the outer surfaces of the two bearing pieces 61a and 61b of the first main bearing portion 61 from the distance between the inner surfaces of the two bearing pieces 71a and 71b of the second main bearing portion 71.

Next, the yoke 66 to which the two magnets 67a and 67b are fixed is attached to the first moving frame 51. Regarding the installation of the yoke 66, the yoke 66 may be attached to the first moving frame 51 in advance, before the first moving frame 51 is attached to the second moving frame 52. Subsequently, the coil supporting stand 85 to which the coil assembly body 93 is attached is attached to the coil fixed portion 53b of the fixed base board 53. It is desirable to attach the coil supporting stand 85 as described below, for example.

First, the first moving frame 51 and the fixed base board 53 are positioned in predetermined positions and temporarily fixed. As shown in FIG. 21, the first moving frame 51 and the fixed base board 53 are temporarily fixed such that a positioning hole 51e provided approximately in the center of the first moving frame 51 and a positioning hole 53d provided approximately in the center of the fixed base board 53 are used, for example, and a positioning shaft is fitted into the holes. Here, the second moving frame 52 is provided with an escape hole 52a having a diameter larger than the diameter of the positioning shaft, so as to prevent the positioning shaft from being in contact with the inner circumferential surface of the escape hole 52a. Thus, the positions of the first moving frame 51 and the fixed base board 53 can be determined in predetermined positions, and as a result, an optical axis of the correcting lens 15 is positioned in a predetermined position with respect to the fixed base board 53.

On this occasion, the cylindrical coil 91 is fitted from the side, and the lower piece 66b of the yoke 66 and the lower magnet 67b are inserted into the hole thereof. At this time, the coil supporting stand 85 is moved in the first direction X and in the second direction Y arbitrarily, and the magnetic flux density generated with the work of the magnets 67a and 67b, detected by the two hall elements 94 and 95 fixed to the flexible wiring board 87, is measured. Further, the position of the coil supporting stand 85 is determined to be a position where a certain value of the magnetic force received by both the hall elements 94 and 95 from the magnets 67a and 67b is set to a reference value.

In the above position, the coil supporting stand 85 is fixed to the fixed base board 53 using adhesive. Thus, the assembly of the image stabilizer 5 is completed, and the image stabilizer 5 with a structure shown in FIGS. 13 to 20 is obtained. It should be noted that as later described the coil and two hall elements may be fixed to a first moving frame, and a magnet which moves relatively to the coil and hall elements may be moved. Accordingly, the magnetic force from the magnets 67a and 67b is detected by both the hall elements 94 and 95, the magnet is positioned based upon the detected result, and the magnet may be fixed to the fixed base board 53 with adhesive.

The functions of the image stabilizer 5 with the above-described structure are as follows. The movement of the correcting lens 15 of the image stabilizer 5 is performed by selectively or simultaneously supplying a driving current of an appropriate value to the flat coil 88 and the cylindrical coil 91 of the electric actuator 54 via the flexible printed circuit board 87.

The flat coil 88 and the cylindrical coil 91 of the image stabilizer 5 are fixed to the coil supporting stand 85 by means of the flexible reinforcing plate 86, and further, are fixed to the fixed base board 53 by means of the coil supporting stand 85. On this occasion, the thrust-generating portions 89a and 89b of the flat coil 88 are extended in the second direction Y, and the thrust-generating portion 92 of the cylindrical coil 91 is extended in the first direction X. Further, since the two magnets 67a and 67b fixed to the upper and lower inner surfaces of the yoke 66 are provided above and below both the coils 88 and 91, the magnetic flux of a magnetic circuit formed with the yoke 66 and the two magnets 67a and 67b acts so as to vertically pass through the thrust-generating portions 89a and 89b of the flat coil 88 and the thrust-generating portion 92 of the cylindrical coil 91.

The yoke 66 and the two magnets 67a and 67b are fixed to the first moving frame 51 holding the correcting lens 15. The correcting lens 15 is supported by the first guide, which has the first moving frame 51, in a movable manner in the first direction X with respect to the second moving frame 52. Further, the correcting lens 15 is supported by the second guide, which has the second moving frame 52, in a movable manner in the second direction Y with respect to the fixed base board 53. Therefore, with the action of the first guide and second guide, the correcting lens 15 is freely movable both in the first direction X and second direction Y within a predetermined range.

If an electric current is applied to the flat coil 88, the electric current flows in the second direction Y at the thrust-generating portions 89a and 89b because the thrust-generating portions 89a and 89b are extended in the second direction Y. On this occasion, since the magnetic flux of the magnetic circuit acts in the direction vertical to the thrust-generating portions 89a and 89b, force directed to the first direction X acts on the magnets 67a and 67b and the yoke 66 according to Fleming's left-hand rule. Thus, the first moving frame 51, to which the yoke 66 and the like are fixed, moves in the first direction X. As a result, the correcting lens 15 held by the first moving frame 51 moves in the first direction X, guided by the first guide, in accordance with the amount of electric current applied to the flat coil 88.

On the other hand, if an electric current is applied to the cylindrical coil 91, the electric current flows in the first direction X at the thrust-generating portion 92 because the thrust-generating portion 92 is extended in the first direction X. On this occasion, since the magnetic flux of the magnetic circuit acts in the direction vertical to the thrust-generating portion 92, force directed to the second direction Y acts on the magnets 67a and 67b and the yoke 66 according to Fleming's left-hand rule. Thus, the second moving frame 52 moves in the second direction Y by means of the first moving frame 51 to which the yoke 66 and the like are fixed. As a result, the correcting lens 15 moves in the second direction Y, with the first moving frame 51 and second moving frame 52 guided by the second guide, in accordance with the amount of electric current applied to the cylindrical coil 91.

Further, if electric currents are simultaneously applied to the flat coil 88 and the cylindrical coil 91, the movement caused by the flat coil 88 and the movement caused by the cylindrical coil 91, both of which have been mentioned above, are performed in a combined manner. Specifically, the correcting lens 15 moves in the first direction X due to the action of the electric current which flows through the flat coil 88, and at the same time, the correcting lens 15 moves in the second direction Y due to the action of the electric current which flows through the cylindrical coil 91. As a result, the correcting lens 15 moves in a diagonal direction, thereby stabilizing images of the lens system 2.

In this case, the moving amount of the correcting lens 15 in the first direction X and in the second direction Y is detected by the first hall element 94 and the second hall element 95 as described below, for example. The two hall elements 94 and 95 detect in the respective positions the moving amount (displacement amount) of the correcting lens 15 by detecting the amount of change in the magnetic flux density generated by the action of the magnets 67a and 67b.

The first hall element 94 detects position information regarding the first direction X (or the second direction Y as an alternative), and is placed in a position overlapped with the edges of the chamfers 57a and 57a on one side of the pair of magnets 67a and 67b. The second hall element 95 detects position information regarding the second direction Y (or the first direction X as an alternative), and is placed in a position overlapped with the edges of the chamfers 57b and 57b on the other side of the pair of magnets 67a and 67b. The two hall elements 94 and 95 are placed such that the centers of the detecting portions 94a and 95a approximately correspond with the edges of the chamfers 57a and 57b. These positions are determined to be the reference positions of the two hall elements 94 and 95, and the amount of moving in the first direction X and in the second direction Y from the reference positions is detected as the moving amount of the correcting lens 15.

FIGS. 58A to 58E are diagrams for explaining the structure, functions and the like of a position-detecting mechanism according to an embodiment of the present invention. FIG. 58A shows the schematic configuration; FIG. 58B is a graph showing a relationship between a magnetic flux density detected and a relative moving distance; FIG. 58C is a diagram showing main parts when the magnets 67a and 67b and the hall elements 94 and 95 are relatively moved in the second direction Y. FIG. 58D is a diagram showing main parts when the magnets 67a and 67b and the hall elements 94 and 95 are relatively moved in the first direction X. FIG. 58E is a table explaining the states of magnetic flux densities detected in the states of FIGS. 58C and 58D.

Here, as shown in FIG. 58D, it is assumed that the relative movement occurs only in the first direction X, and that the amount of displacement in the second direction Y is zero. In this case, the first hall element 94 and the second hall element 95 detect similar values and move in a direction coming relatively close (a first direction X+), with the positions, where the centers of the detecting portions 94a and 95a approximately correspond with the edges of the chamfers 56a, 57a and 56b, 57b of the magnets 67a and 67b, being the reference positions, thereby the detected magnetic flux density increasing (see FIGS. 58B, 58D and 58E). With the positions, where the centers of the detecting portions 94a and 95a approximately correspond with the edges of the chamfers 56a, 57a and 56b, 57b of the magnets 67a and 67b, being the reference positions, the first hall element 94 and the second hall element 95 move, on the contrary, in a direction going relatively away (a first direction X-), thereby the detected magnetic flux density decreasing (see FIGS. 58B, 58D and 58E).

Further, as shown in FIG. 58C, it is assumed that the relative movement occurs in the second direction Y+, and that the amount of displacement in the first direction X is zero. In this case, the first hall element 94 moves in the direction coming relatively close (the second direction Y+), with the position, where the center of the detecting portion 94a approximately corresponds with the edges of the chamfers 56a, 57a and 56b, 57b of the magnets 67a and 67b, being a reference position, thereby the detected magnetic flux density increasing (see FIGS. 58B, 58C and 58E). The second hall element 95, on the contrary, moves in a direction going relatively away, with the position, where the center of the detecting portion 95a approximately corresponds with the edges of the chamfers 56a, 57a and 56b, 57b of the magnets 67a and 67b, being a reference position, thereby the detected magnetic flux density decreasing.

Further, as shown in FIG. 58C, it is assumed that the relative movement occurs in the second direction Y-, and that the amount of displacement in the first direction X is zero. In this case, the detected results of the two hall elements 94 and 95 are reverse to the relationship in the case of the second direction Y+. Since the center of the detecting portion 94a of the first hall element 94 moves in a direction going relatively away (the second direction Y-), thereby the detected magnetic flux density decreasing (see FIGS. 58B, 58C and 58E). Since the center of the detecting portion 95a of the second hall element 95, on the contrary, moves in a direction coming relatively close, thereby the detected magnetic flux density increasing.

On this occasion, if the relative moving amount (hereinafter referred to as "substantial moving amount") between the first and second hall elements 94 and 95 and the magnets 67a and 67b is represented by 1, the apparent relative moving amount at the detecting portions 94a and 95a with respect to the edges of the magnets 67a and 67b (hereinafter referred to as "apparent moving amount") is 1/√2. This is obtained, because the edges of the magnets 67a and 67b move parallel to the two hall elements 94 and 95 at an angle of 45°. Specifically, the change in the magnetic force of the magnets 67a and 67b detected in the detecting portions 94a and 95a is 1/√2 times the change in the case of the related art shown in FIGS. 1A to 1E. Therefore, in this embodiment, in order for the detecting portions 94a and 95a to detect a magnetic force similar to that in the case of the related art, it is necessary for the "apparent moving amount" to be √2 times the "substantial moving amount".

Accordingly, since the "apparent moving amount" is larger than the "substantial moving amount", the amount of displacement between them can be detected with accuracy. Thus, since high detection accuracy is obtained regarding detection of the position of the correcting lens 15, the position of the correcting lens 15 can be controlled with high accuracy, thereby stabilizing images with accuracy.

The image stabilizer 5 having the above-described structure and functions is attached to the lens device 1, as shown in FIGS. 2 to 6. The image stabilizer 5 is inserted into and pulled out of the opening 48, provided in the lower barrel 18 of the lens barrel 3, from the lateral direction; and is attached to the lower barrel 18 in a detachable manner. In this case, the image stabilizer 5 according to an embodiment of the present invention is formed as a unit constituting one device, and so can be attached and detached easily and swiftly. The numeral 98 shown in FIG. 6 denotes a cover member which covers the image stabilizer 5. This cover member 98 is attached to the lower barrel 18 of the lens barrel 3 in a detachable manner by a fastening mechanism such as fixed screws.

Next, operation of the lens system 2 of the lens device 1 in which the image stabilizer 5 has been installed is explained, referring to FIG. 7. When the objective lens 7A of the lens device 1 is aimed at an object, light from the object goes along the optical axis L and is input from the objective lens 7A to the inside of the lens system 2. On this occasion, light passed through the objective lens 7A is bent by 90° in the prism 7B, and after that, moves toward the imager 4 along the optical axis L. Specifically, light which has been reflected on the prism 7B and which has passed through the second lens 7C of the first-group lens 7 passes through the second-group lens 8, the third-group lens 9 and the fourth-group lens 10, passes through the seventh lens 11A and the correcting lens 15 of the fifth-group lens 11, and passes through the optical filter 14, thereby forming an image corresponding to the object on the focal plane of the imager 4.

In this case, at the time of shooting, when camera shake and vibration are not applied to the lens device 1, light reflected from the object moves through each center portion of the first-group to fifth-group lenses along the optical axis L as shown by the solid line of light 6A, and so an image is formed at a predetermined position on the focal plane of the imager 4, and an excellent image can therefore be obtained without image blurring being caused.

On the other hand, at the time of shooting, when camera shake or vibration is applied to the lens device 1, light reflected from the object is input to the first-group lens in a inclined state as shown by the chain line of light 6B or shown by the broken line of light 6C. At each of the first-group to fifth-group lenses, the incident lights 6B, 6C pass through the lenses, deviating from the optical axis L; however, it is possible to correct the camera shake or the like by moving the correcting lens 15 by a predetermined amount in accordance with the camera shake or the like. This makes it possible to form an image at a predetermined position on the focal plane of the imager 4, and an excellent image can be obtained by eliminating image blurring.

Camera shake, vibration or the like regarding the lens device 1 is detected by means of a blur detector. As this blur detector, a gyro sensor can be used, for example. This gyro sensor is installed in a camera body along with the lens device 1, and acceleration, angular velocity, angular acceleration and the like which act on the lens device 1 caused by a vibration, camera shake and the like of a photographer's hands are detected. Information detected by the gyro sensor, such as acceleration and angular velocity, is supplied to a control device, and the electric actuator 54 is driven and controlled such that the first moving frame 51 is moved in the first direction X in response to a shake in the first direction X, and the second moving frame 52 is moved in the second direction Y in response to a shake in the second direction Y, thus allowing an image to be formed at a predetermined position on the focal plane of the imager 4.

FIGS. 8 to 12 are figures showing a digital still camera 100 which is a first embodiment of an imaging apparatus provided with a lens device 1 having the above-described structure. The digital still camera 100 uses a semiconductor recording medium as an information recording medium, and an optical image obtained from an object is converted to electric signals in an imager (such as CCD and CMOS) so as to be recorded in the semiconductor recording medium and displayed on a display apparatus such as a liquid crystal display.

As shown in FIG. 8 and other figures, the digital still camera 100 includes: a camera body 101, a lens device 1, a display apparatus 102, a control unit 103, a battery power not shown in the figures and the like. The camera body 1 shows a specific example of an imaging apparatus body. The lens device 1 captures an image of an object as light and leads it to an imager 4. The display apparatus 102 is formed of a liquid crystal display which displays an image based upon an image signal that is output from the imager 4, and the like. The control unit 103 controls the action of the lens device 1, the display of the liquid crystal display 102 and the like.

The camera body 101 is formed of a wide flat casing, including: a front case 105 and a rear case 106 fitted together in an anteroposterior direction; a main frame 107 which divides a space portion formed by the front case 105 and rear case 106 into front and rear portions; a lens cover 108 which is attached to the front surface of the front case 105 in a slidable manner in the vertical direction; and the like. The lens device 1 is disposed on a portion of the front surface of the main frame 107,
with the imager 4 disposed below and the optical axis L directed in the vertical direction. Further, the control unit 103 formed by installing a predetermined microcomputer, resistance, capacitor, other electronic components and the like on a wiring substrate; a flash device 110; and the like are attached to the main frame 107.

The control unit 103 is provided side by side with the lens device 1, and the flash device 110 is provided above. The flash device 110 includes: a light-emitting portion 110a exposed on the front surface of the front case 105; a drive portion 110b which drives and controls the light-emitting portion 110a; a capacitor 110c which supplies predetermined electric power to the drive portion 110b; and the like. In order to expose the light-emitting portion 110a of the flash device 110 and an objective lens 7A of the lens device 1, a lens fitting hole 111a and a flash fitting hole 111b are provided at corresponding positions of the front case 105. The objective lens 7A is fitted into the lens fitting hole 111a along with a panel 21, and the light-emitting portion 110a is fitted into the flash fitting hole 111b.

Further, a plurality of openings 111c through which a plurality of leg pieces provided on the lens cover 108 are inserted are provided in the front case 105. The plurality of leg pieces with detachment-preventing portions are provided to prevent the lens cover 108 from falling off the front case 105. The lens cover 108 can be moved in the vertical direction by the plurality of openings 111c, and can be locked at the top and bottom by a locking mechanism not shown in the figures. As shown in FIG. 9, when the lens cover 108 is at the top, the objective lens 7A is completely closed, thereby protecting the objective lens 7A. On the other hand, as shown in FIG. 10, when the lens cover 108 has moved to the bottom, the objective lens 7A is completely opened and the power switch is turned on, thereby capturing images.

As shown in FIGS. 8 and 11, a square opening window 112 for exposing the display surface of the display apparatus 102 is provided in the rear case 106. The opening window 112 is provided with a large opening made in the back surface of the rear case 106, and the display apparatus 102 is provided inside thereof. The display apparatus 102 is a combination of a liquid crystal display having a size corresponding to the opening window 112 and a back light fitted onto the inner surface of the liquid crystal display. A protective plate 114 is provided on the liquid crystal display side of the display apparatus 102 with a seal frame 113 in between, and the peripheral edge of the protective plate 114 is brought in contact with the inner surface of the opening window 112.

Further, various operational switches are provided in the rear case 106. As the operational switches, there are provided in appropriate positions a mode selection knob 115, a zoom button 116, a screen display button 117, a menu button 118, a direction key 119, a screen button 121 and the like. The mode selection knob 115 selects a function mode (still image, moving image, playback and the like). The zoom button 116 performs zooming operation. The screen display button 117 performs screen display. The menu button 118 selects various menus. The direction key 119 moves a menu-selecting cursor and the like. The screen button 121 switches screen sizes and deletes a screen. A speaker hole 122 is formed at an end of the rear case 106 on the side of the display apparatus 102, in which a loudspeaker is incorporated, and a strap supporting metal piece 123 is attached to an end on the opposite side thereof.

Further, as shown in FIG. 12 and other figures, on the upper surface of the camera body 101 are provided: a power button 125 with which to turn the power on/off; a shooting button 126 with which to start and end shooting; a camera shake setting button 127 with which an image stabilizer 5 is operated to stabilize images when a camera shake occurs; and the like. Further, a microphone hole 128 is formed approximately at the center of the upper surface of the camera body 101, in which a microphone is incorporated. The power button 125, the shooting button 126 and the camera shake setting button 127 are all attached to a switch holder 124 installed in the camera body 101. Further, the microphone hole 128 is also formed in the switch holder 124, and the built-in microphone is fixed to the switch holder 124.

FIG. 55 is a block diagram explaining a concept of control with the above-described image stabilizer 5. A control unit 130 includes: an image stabilization calculating unit 131; an analog servo unit 132; a driving circuit unit 133; four amplifiers (AMP) 134A, 134B, 135A and 135B; and the like. To the image stabilization calculating unit 131 are connected a first gyro sensor 136 through the first amplifier (AMP) 134A, and a second gyro sensor 137 through the second amplifier (AMP) 134B.

The first gyro sensor 136 detects the amount of displacement in the first direction X caused by a camera shake or the like applied to the camera body 101, and the second gyro sensor 137 detects the amount of displacement in the second direction Y caused by a camera shake or the like applied to the camera body 101. Although an example in which the amount of displacement in the first direction X and the amount of displacement in the second direction Y are separately detected by providing two gyro sensors has been explained in this embodiment, it should be appreciated that, the amount of displacement in the two directions, the first direction X and second direction Y, may be detected by one gyro sensor.

The analog servo unit 132 is connected to the image stabilization calculating unit 131. The analog servo unit 132 converts a value calculated by the image stabilization calculating unit 131 from a digital value to an analog value, and outputs a control signal corresponding to the analog value. The driving circuit unit 133 is connected to the analog servo unit 132. To the driving circuit unit 133 are connected: the first hall element 94, which is a first position-detecting element, through the third amplifier (AMP) 135A; and the second hall element 95, which is a second position-detecting element, through the fourth amplifier (AMP) 135B. Further, to the driving circuit unit 133 are connected: the flat coil 88, which is a first direction driving coil; and the cylindrical coil 91, which is a second direction driving coil.

The amount of displacement of the first moving frame 51 in the first direction X, detected by the first hall element 94, is input to the driving circuit unit 133 through the third amplifier 135A. Further, the amount of displacement of the second moving frame 52 in the second direction Y, detected by the second hall element 95, is input to the driving circuit unit 133 through the fourth amplifier 135B. Upon receiving the input signals and the control signal from the analog servo unit 132, the driving circuit unit 133 outputs a predetermined control signal to one or both of the flat coil 88 and the cylindrical coil 91, in order to move the correcting lens 15 for stabilizing images.

FIG. 56 is a block diagram showing a first embodiment of a schematic configuration of a digital still camera 100 including an image stabilizer 5 having the above-described structure and functions. The digital still camera 100 includes a lens device 1, a control unit 140, a storage apparatus 141, an operation unit 142, a display apparatus 102, an external memory 143 and the like. The lens device 1 includes the image stabilizer 5. The control unit 140 functions as a main part in a control apparatus. The storage apparatus 141 has a program memory, data memory, other RAM/ROM or the like for driving the control unit 140. The operation unit 142 inputs various instruction signals or the like for turning the power on/off, selecting a shooting mode, performing shooting and the like. The display apparatus 102 displays a captured image or the like. The external memory 143 is provided to obtain large storage capacity.

The control unit 140 includes an operational circuit having a microcomputer (CPU); and the like, for example. The storage apparatus 141, the operation unit 142, an analog signal processing unit 144, a digital signal processing unit 145, two A/D converters 146 and 147, a D/A converter 148, and a timing generator (TG) 149 are connected to the control unit 140. The analog signal processing unit 144 is connected to an imager 4 attached to the lens device 1, and performs predetermined signal processing using an analog signal corresponding to a captured image output from the imager 4. The analog signal processing unit 144 is connected to the first A/D converter 146, and an output thereof is converted to a digital signal by the A/D converter 146.

To the first A/D converter 146 is connected the digital signal processing unit 145 which performs predetermined signal processing using a digital signal supplied from the first A/D converter 146. To the digital signal processing unit 145 are connected the display apparatus 102 and the external memory 143, and an image corresponding to an object is displayed on the display apparatus 102 or stored in the external memory 143, based upon a digital signal output from the digital signal processing unit 145. Further, to the second A/D converter 147 is connected a gyro sensor 151 showing a specific example of a blur-detecting unit. A vibration, shake or the like of a camera body 101 is detected by the gyro sensor 151, and image stabilization is performed according to the detected result.

To the D/A converter 148 is connected a driving control unit 152 which is a servo calculating unit for image stabilization. The driving control unit 152 stabilizes images by driving and controlling the image stabilizer 5 in accordance with the position of a correcting lens 15. To the driving control unit 152 are connected the image stabilizer 5, and a first hall element 94 and a second hall element 95 that are position detectors configured to detect the position of the correcting lens 15 by detecting the positions of two moving frames 51 and 52. In addition, the timing generator (TG) 149 is connected to the imager 4.

Thus, when an object image has been input to a lens system 2 of the lens device 1 and then an image has been formed on the focal plane of the imager 4, an image signal thereof is output as an analog signal on which predetermined processing is performed at the analog signal processing unit 144 and afterward which is converted to a digital signal by the first A/D converter 146. After predetermined processing is performed at the digital signal processing unit 145, an output from the first A/D converter 146 is displayed on the display apparatus 102 as an image corresponding to the object, or is stored in an external memory as memory information.

In the above-described shooting state, when a vibration, shake or the like is applied to the camera body 101 with the image stabilizer 5 in the operational state, the gyro sensor 151 detects the vibration, shake or the like and then outputs a detection signal thereof to the control unit 140. Upon receiving the signal, the control unit 140 performs predetermined calculation processing, and outputs a control signal which controls the action of the image stabilizer 5 to the driving control unit 152. The driving control unit 152 outputs a predetermined driving signal to the image stabilizer 5 upon receiving the control signal from the control unit 140, thereby moving the first moving frame 51 in the first direction X by a predetermined amount and moving the second moving frame 52 in the second direction Y by a predetermined amount. Accordingly, images can be stabilized by means of the movement of the correcting lens 15 and thus an excellent image can be obtained.

FIG. 57 is a block diagram showing a second embodiment of the schematic configuration of a digital still camera including an image stabilizer 5 having the above-described structure and functions. The digital still camera 100A includes a lens device 1, a video recording/reproducing circuit unit 160, an internal memory 161, a video signal processing unit 162, a display apparatus 163, an external memory 164, a correcting lens control unit 165 and the like. The lens device 1 includes an image stabilizer 5. The video recording/reproducing circuit unit 160 functions as a main part in a control device. The internal memory 161 has a program memory, data memory, other RAM/ROM or the like for driving the video recording/reproducing circuit unit 160. The video signal processing unit 162 processes a captured image or the like into a predetermined signal. The display apparatus 163 displays a captured image or the like. The external memory 164 is provided to obtain larges storage capacity. The correcting lens control unit 165 drives and controls the image stabilizer 5.

The video recording/reproducing circuit unit 160 includes: an operational circuit having a microcomputer (CPU), and the like, for example. The internal memory 161, the video signal processing unit 162, the correcting lens control unit 165, a monitor driving unit 166, an amplifier 167 and three interfaces (I/F) 171, 172 and 173 are connected to the video recording/reproducing circuit unit 160. The video signal processing unit 162 is connected to an imager 4 attached to the lens device 1, via the amplifier 167, and a signal which has been processed into a predetermined video signal is input to the video recording/reproducing circuit unit 160.

The display apparatus 163 is connected to the video recording/reproducing circuit unit 160 through the monitor driving unit 166. Further, a connector 168 is connected to the first interface (I/F) 171, and the external memory 164 can be connected to the connector 168 in a freely detachable manner. A connecting terminal 174 provided to a camera body 101 is connected to the second interface (I/F) 172.

An acceleration sensor 175, which is a blur-detecting unit, is connected to the correcting lens control unit 165 via the third interface (I/F) 173. The acceleration sensor 175 detects displacement due to vibration, shake or the like applied to the camera body 101, as acceleration, and a gyro sensor can be used as the acceleration sensor 175. To the correcting lens control unit 165 are connected: a lens driving unit of the image stabilizer 5, which drives and controls a correcting lens 15, and two position-detecting sensors 94 and 95 which detect the position of the correcting lens 15.

Thus, when an object image has been input to a lens system 2 of the lens device 1 and then an image has been formed on the focal plane of the imager 4, an image signal thereof is input to the video signal processing unit 162 through the amplifier 167. A signal which has been processed into a predetermined video signal at the video signal processing unit 162 is input to the video recording/reproducing circuit unit 160. Thus, a signal corresponding to the image of the object is output to the monitor driving unit 166, and the internal memory 161 or the external memory 164 from the video recording/reproducing circuit unit 160. As a result, an image corresponding to the image of the object is displayed on the display apparatus 163 through the monitor driving unit 166, or is recorded in the internal memory 161 or in the external memory 164 as an information signal, according to need.

In the above-described shooting state, when a vibration, shake or the like is applied to the camera body 101 with the image stabilizer 5 in the operational state, the acceleration sensor 175 detects the vibration, shake or the like and then outputs a detection signal thereof to the video recording/reproducing circuit unit 160 through the correcting lens control unit 165. Upon receiving the signal, the video recording/reproducing circuit unit 160 performs predetermined calculation processing, and outputs a control signal, which controls the action of the image stabilizer 5, to the correcting lens control unit 165. The correcting lens control unit 165 outputs a predetermined driving signal to the image stabilizer 5 upon receiving the control signal from the video recording/reproducing circuit unit 160, thereby moving a first moving frame 51 in the first direction X by a predetermined amount and moving a second moving frame 52 in the second direction Y by a predetermined amount. Accordingly, images can be stabilized by means of the movement of the correcting lens 15, thereby obtaining excellent images.

FIGS. 34 to 54 show a second embodiment of an image stabilizer according to the present invention, formed as an image stabilizer 300 including an electric actuator of a moving coil (moving hall element) system. The electric actuator in the image stabilizer 300 is formed as a moving hall element (moving coil) system in which the two magnets 67a and 67b in the image stabilizer 5 described in the above embodiment are interchanged with the two hall elements 94 and 95. The same reference numerals are given to the portions in the image stabilizer 300 corresponding to those in the image stabilizer 5 and redundant explanations thereof will be omitted.

The image stabilizer 300 includes a first moving frame 51A, a second moving frame 52 and a fixed base board 53A. The first moving frame 51A has: a lens fixed portion 51a similar to the lens fixed portion 51a provided to the first moving frame 51 in the above-described embodiment; and a coil fixed portion 51f integrally formed. A correcting lens 15 is fitted and fixed to a fitting hole 58 provided at the center of the lens fixed portion 51a of the first moving frame 51A. On one side of the lens fixed portion 51a is provided a first main bearing portion 61, and on the other side opposite thereto is provided a first sub bearing portion 62.

A first main guide shaft 63 penetrates into the first main bearing portion 61 in a horizontal direction, and in its middle part, the first main guide shaft 63 is pressed and fixed to the first main bearing portion 61. Further, the lens fixed portion 51a is provided with a positioning hole 51e. Further, the first sub bearing portion 62 is provided with a bearing groove 64 made in its side, and a first sub guide shaft 65 is engaged with the bearing groove 64 in a freely slidable manner. A coil assembly body 93A is integrally fixed to the coil fixed portion 51f.

As shown in FIG. 51 and other figures, the coil assembly body 93A has a slightly different shape from the coil assembly body 93 in the above-described embodiment, however, has approximately similar structure, including: a flat coil 88, which is a first coil; a cylindrical coil 91, which is a second coil; a flexible reinforcing plate 86; and a flexible wiring board 87. The flat coil 88 is fixed on the upper surface of the flexible reinforcing plate 86, and the flexible wiring board 87 is fixed on the lower surface of the flexible reinforcing plate 86. The cylindrical coil 91 and the two hall elements 94 and 95 are fixed on the lower surface of the flexible wiring board 87. The flexible reinforcing plate 86 is fixed to the coil fixed portion 51f of the first moving frame 51A. Thus, the coil assembly body 93A to which the two hall elements 94 and 95 are attached is integrally formed with the first moving frame 51A.

The second moving frame 52 is the same as the second moving frame 52 in the above-described embodiment. A second main guide shaft 77 penetrates into a third main bearing portion 75 of the second moving frame 52; and in its middle part, the second main guide shaft 77 is inserted through the third main bearing portion 75 in a freely slidable manner and is supported in a freely turnable manner. A third sub bearing portion 76 is provided with a bearing groove 78 made on its side, and a second sub guide shaft 79 is engaged with the bearing groove 78 in a freely slidable manner. The second moving frame 52 is provided with an escape hole 52a.

The fixed base board 53A has an approximately similar external shape to the fixed base board 53, but has a yoke fixed portion 53e instead of the coil fixed portion 53b. The yoke fixed portion 53e of the fixed base board 53A is provided with a rear supporting wall 84A supporting a yoke 66. The rear supporting wall 84A is arranged on the opposite side to a moving frame supporting portion 53a of the yoke fixed portion 53e and is set to have a height capable of supporting a joint piece 66c of the yoke 66 up to its middle part. The width of the rear supporting wall 84A is made slightly larger than that of the joint piece 66c, and the outer surface of the joint piece 66c is joined to the inner surface of the rear supporting wall 84A with adhesive. The yoke 66 may be fixed onto the rear supporting wall 84A or to the yoke fixed portion 53e, using fixed screws.

Further, a fourth main bearing portion 82 including two bearing pieces 82a and 82b is provided to one side edge of the fixed base board 53A, and a fourth sub bearing portion 83 including two bearing pieces 83a and 83b is provided to the other side edge opposite thereto. Protruding portions at both ends of the second main guide shaft 77 of the second moving frame 52 are pressed and fixed into the two bearing pieces 82a and 82b of the fourth main bearing portion 82. Further, both ends of the second sub guide shaft 79 are fixed to and supported by the two bearing pieces 83a and 83b of the fourth sub bearing portion 83. The fixed base board 53A includes a positioning hole 53d for determining its position in relation to the first moving frame 51A.

The yoke 66 is approximately similar to that in the above-described embodiment. Specifically, the yoke 66 has an upper piece 66a and a lower piece 66b opposed to each other, and a joint piece 66c joining the both. A pair of magnets 67a and 67b having a similar shape to those in the above-described embodiment are fixed to the inner surfaces of the upper and lower pieces 66a and 66b of the yoke 66 with adhesive. At both ends of these magnets 67a and 67b in the lengthwise direction are provided chamfers 57a and 57b whose edges correspondingly overlapped with the edges of chamfers 56a and 56b at both ends of the upper and lower pieces 66a and 66b in the lengthwise direction.

The first hall element 94 and the second hall element 95 are placed such that the centers of their detecting portions approximately correspond with the edges of the chamfers 57a and 57b of the pair of magnets 67a and 67b and with the edges of the chamfers 56a and 56b of the upper and lower pieces 66a and 66b of the yoke 66. Similarly to the two coils 88 and 91, electric circuits of the two hall elements 94 and 95 are electrically connected to an electric circuit of the flexible wiring board 87, respectively, and are fixed to the lower surface of the flexible wiring board 87. The yoke 66 is fixed to the fixed base board 53A by fixing the joint piece 66c thereof to the yoke fixed portion 53e with the two pieces 66a and 66b facing each other in the vertical direction.

In this embodiment, the direction in which the fourth main bearing portion 82 is opposed to the fourth sub bearing portion 83 is set to be a first direction X. The two hall elements 94 and 95 are placed on both sides in a direction perpendicular to the first direction X. With the first moving frame 51A and the fixed base board 53A being positioned in predetermined positions, the two hall elements 94 and 95 are placed such that the centers of the detecting portions of the hall elements 94 and 95 are overlapped with the edges of the two chamfers 57a and 57b of the magnets 67a and 67b being reference positions.

Specifically, the first hall element 94 is placed such that its direction of detecting magnetic force corresponds to a direction perpendicular to the direction in which the edges extend, so that the center of the first hall element 94 will pass across the edge of the chamfer 57a on one of the magnets 67a and 67b. Then, the second hall element 95 is placed such that its detection of directing magnetic force corresponds to a direction perpendicular to the direction in which the edges extend, so that the center of the second hall element 95 will pass across the edge of the chamfer 57b on the other of the magnets 67a and 67b. On this occasion, the direction of detecting magnetic force by the first hall element 94 and the direction of detecting magnetic force by the second hall element 95 intersect each other in directions approximately perpendicular to each other.

The positioning of the first moving frame 51A and the fixed base board 53A at the time of assembly can be conducted easily and surely, by inserting reference pins, not shown in the figures, in the positioning holes 51e and 53d and temporarily fixing the reference pins. Other constructions are similar to those in the image stabilizer 5 according to the first embodiment shown in FIGS. 13 to 33. Effectiveness similar to that of the above-described embodiment can be obtained by constructing the image stabilizer 300 in this manner as well.

As described above, in the image stabilizer, lens device and imaging apparatus according to an embodiment of the present invention, a first hall element 94 and a second hall element 95 respectively detect the edges of magnets 67a and 67b having phases of 90° to each other and being approximately 45° different in phase from a first direction X and a second direction Y which are shift directions of a correcting lens 15. The shift amount in the two directions is detected by the two hall elements working in cooperation. Therefore, the change in the magnetic flux density of the magnets 67a and 67b in relation to the shift amount of the correcting lens 15 can be reduced to 1/√2 times the change in related art of the perpendicular state. Accordingly, the shift amount to reach a nonlinear region and saturation region can be expanded, thereby obtaining a large shift amount for high-power zooming or the like. Further, with the same shift amount as that of the related art, the nonlinear region and the saturation region may be prevented with the shift amount of 1/√2, image can be stabilized easily and surely, using a linear region.

Thus, according to the embodiments of the present invention, there are provided a first hall element and a second hall element which detect position information on a correcting lens regarding a first direction and a second direction that are the moving directions thereof by detecting magnetic force of a magnet. Regarding the position relationship between the first and second hall elements and the magnet faced, while an optical axis of the correcting lens held on a moving frame supported by a supporting frame corresponds with an optical axis of a lens system, the centers of the first and second hall elements are positioned to approximately pass over edges of two sides of the magnet. Further, the edges of the two sides of the magnet are different in phase from the first direction and the second direction by approximately 45°, also, the edges of the two sides are formed by planes having a phase of intersecting angle of approximately 90°, and the first hall element and the second hall element relatively move in diagonal directions corresponding to the edges.

Thus, the change in the magnetic flux density of the magnet in relation to the shift amount of the correcting lens can be reduced to 1/√2 times the change in the case of the perpendicular state of the related art, and the shift amount to reach a nonlinear region and saturation region can be expanded, thereby obtaining a large shift amount for high-power zooming or the like. Further, with the same shift amount as that of the related art, the nonlinear region and the saturation region may be reduced to 1/√2 in shift amount, there are provided an image stabilizer, a lens device having the image stabilizer, and an imaging apparatus incorporating the lens device, using a linear region with respect to change in the magnetic flux density to stabilize images easily and surely.

Further, a lens device is formed including groups of lenses, in which light transmitted through an objective lens is led to a correcting lens (the fifth-group lens) of the image stabilizer after being bent by 90° in a prism, so that the correcting lens becomes parallel with the ground when the posture of an imaging apparatus is correct, and a first direction and a second direction, which are the directions of moving the correcting lens, become perpendicular to the direction in which gravity works. Therefore, the first and second moving frames which hold the correcting lens in a freely movable manner are not pulled toward the first direction or second direction by gravity, and it is not necessary to supply the image stabilizer with power all the time in order to hold up the first and second moving frames in a direction opposed to gravity.

As a result, power consumption can greatly be reduced when shooting takes place with the correct posture of the imaging apparatus, and a time period for which the imaging apparatus can be used is extended. Moreover, it is possible to reduce the thrust with which the correcting lens moves, so that an allowance for the empty weight of the first and second moving frames, namely a hand shake acceleration of approximately 1G, is made possible, and a shake of a camera such as a more violent hand shake can be coped with. However, it should be appreciated that the present invention is not limited to such lens device, but can be applied to a collapsible lens device moving back and forth linearly in a nested fashion.

The present invention is not limited to the embodiments described earlier and shown in the drawings, but various modifications are possible without deviating from the gist of the present invention. For example, although examples in which a digital still camera is used as an imaging apparatus have been explained in the above-described embodiments, embodiments of the present invention can be applied to digital video cameras, camera-incorporated personal computers, camera-attached mobile phone units and other imaging apparatuses as well. Further, although examples in which five group lenses are used as a lens device 1 have been explained, it should be appreciated that the present invention can be applied to a lens device including four group lenses or fewer or six group lenses or more as well.

It should be understood by those skilled in the art that various modifications, combinations, sub-combinations and alterations may occur depending on design requirements and other factors insofar as they are within the scope of the appended claims or the equivalents thereof.

## Claims

1. An image stabilizer comprising:
an electric actuator including a coil (88) and a magnet (67a, 67b) which are capable of moving relatively;
a moving frame (51) to which one of the coil (88) and the magnet (67a, 67b), and a correcting lens (15) are fixed;
a supporting frame (52) to which the other of the coil (88) and the magnet (67a, 67b) is fixed and which supports the moving frame (51) to be capable of moving;
the correcting lens (15) being capable of moving in a first direction (X) perpendicular to an optical axis of a lens system and in a second direction (Y) perpendicular to the first direction (X) and perpendicular to the optical axis, by the electric actuator (54) that moves the moving frame (51), and an optical axis of the correcting lens (15) being controlled to correspond with the optical axis of the lens system to stabilize images obtained through the lens system; **characterized in that** it further comprises:
a first hall element (94) and a second hall element (95) which detect information on a position of the correcting lens (15) in the first direction (X) and in the second direction (Y) by detecting magnetic force of the magnet (67a, 67b), said magnet having a first chamfer (57a) and a second chamfer (57b) at corners on one side and at both ends in a lengthwise direction, said first and second chamfers (57a, 57b) being inclined by an appropriate angle with respect to the first direction (X) and the second direction (Y), wherein
the first hall element (94) is placed in a position overlapped with the edge of said first chamfer (57a) and the second hall element (95) is placed in a position overlapped with the edge of said second chamfer (57b),
wherein
while the optical axis of the correcting lens (15) corresponds with the optical axis of the lens system, the first hall element (94) and the second hall element (95) are arranged such that the centers of the detecting portions (94a, 95a) which detect the magnetic force approximately correspond with the edges of said first and second chamfers, and the first hall element (94) and the second hall element (95) detect magnetic force in the directions perpendicular to the directions in which the edges extend.

2. An image stabilizer according to claim 1, wherein:
the electric actuator (54) has a first coil (88) for moving the correcting lens (15) in the first direction (X), a second coil (91) for moving the correcting lens (15) in the second direction (Y), and the magnet giving magnetic force to the first coil (88) and the second coil (91); and
magnetic force of the one magnet (67a, 67b) is applied to the two coils (88, 91) in common, enabling the correcting lens (15) to be moved in the first direction (X) and in the second direction (Y).

3. An image stabilizer according to claim 2, wherein:
the first coil (88) and the second coil (91) are formed of flat coils having a planar shape, cylindrical coils stacked to a certain height, or a combination of the flat coil and the cylindrical coil; and
the first coil (88) is fixed to one surface of a coil supporting member fixed to the moving frame (51) or the supporting frame (52), the second coil (91) is fixed to the other surface of the coil supporting member, thrust-generating portions (89a, 89b, 92) of the first coil (88) and the second coil (91) are placed to vertically intersect each other, and magnetic force of the magnet (67a, 67b) is applied to both the thrust-generating portions in common.

4. A lens device comprising an image stabilizer according to any one of claims 1 to 3.

5. An imaging apparatus comprising a lens device according to claim 4.

## Patentansprüche

1. Bildstabilisator, der umfasst:
ein elektrisches Betätigungsorgan, welches eine Spule (88) und einen Magneten (67a, 67b) aufweist, die in der Lage sind, sich relativ zueinander zu bewegen;
einen Bewegungsrahmen (51), mit dem eines von der Spule (88) und dem Magneten (67a, 67b) und eine Korrekturlinse (15) fixiert sind;
einen Lagerrahmen (52), mit dem das andere von der Spule (88) und dem Magneten (67a, 67b) befestigt ist und der den Bewegungsrahmen (51) lagert, um in der Lage zu sein, sich zu bewegen;
wobei die Korrekturlinse (15) in der Lage ist, sich in einer ersten Richtung (X) senkrecht zu einer optischen Achse eines Linsensystems und in einer zweiten Richtung (Y) senkrecht zur ersten Richtung (X) und senkrecht zur optischen Achse durch das elektrische Betätigungsorgan (54), welches den Bewegungsrahmen (51) bewegt, zu bewegen und wobei eine optische Achse der Korrekturlinse (15) gesteuert wird, um der optischen Achse des Linsensystems zu entsprechen, um Bilder zu stabilisieren, welche über das Linsensystem erlangt werden, **dadurch gekennzeichnet, dass** er außerdem umfasst:
ein erstes Hall-Element (94) und ein zweites Hall-Element (95), welche Information auf einer Position der Korrekturlinse (15) in der ersten Richtung (X) und in der zweiten Richtung (Y) erfassen, wobei eine Magnetkraft des Magneten (67a, 67b) erfasst wird, wobei der Magnet eine erste Abschrägung (57a) und eine zweite Abschrägung (57b) an Ecken auf einer Seite und bei beiden Enden in einer Längsrichtung hat, wobei die erste und die zweite Abschrägung (57a, 57b) um einen geeigneten Winkel in bezug auf die erste Richtung (X) und die zweite Richtung (Y) geneigt sind, wobei
das erste Hall-Element (94) in einer Position platziert ist, welche sich mit dem Rand der ersten Abschrägung (57a) überlappt, und das zweite Hall-Element (95) in einer Position platziert ist, welches sich mit dem Rand der zweiten Abschrägung (57b) überlappt,
wobei
während die optische Achse der Korrekturlinse (15) der optischen Achse des Linsensystems entspricht, das erste Hall-Element (94) und das zweite Hall-Element (95) so angeordnet sind, dass die Mitten der Erfassungsbereiche (94a, 95a), welche die Magnetkraft erfassen, in etwa den Rändern der ersten und zweiten Abschrägung entsprechen, und das erste Hall-Element (94) und das zweite Hall-Element (95) die Magnetkraft in den Richtungen senkrecht zu den Richtungen erfassen, in welcher sich die Ränder erstrecken.

2. Bildstabilisator nach Anspruch 1, wobei:
das elektrische Betätigungsorgan (54) eine erste Spule (88) hat, um die Korrekturlinse (15) in der ersten Richtung (X) zu bewegen, eine zweite Spule (91), um die Korrekturlinse (15) in der zweiten Richtung (Y) zu bewegen, und den Magneten, der Magnetkraft an die erste Spule (88) und die zweite Spule (91) abgibt; und
die Magnetkraft von dem einen Magneten (67a, 67b) an die beiden Spulen (88, 91) gemeinsam angelegt wird, um zu ermöglichen, dass sich die Korrekturlinse (15) in der ersten Richtung (X) und in der zweiten Richtung (Y) bewegt.

3. Bildstabilisator nach Anspruch 2, wobei:
die erste Spule (88) und die zweite Spule (91) aus flachen Spulen, welche eine ebene Form haben, zylindrischen Spulen, die zu einer bestimmten Höhe aufgestapelt sind, oder einer Kombination der flachen Spule und der zylindrischen Spule gebildet sind; und
die erste Spule (88) an einer Oberfläche eines Spulenlagerteils fixiert ist, welches an dem Bewegungsrahmen (51) oder dem Lagerahmen (52) fixiert ist, die zweite Spule (91) an der anderen Oberfläche des Spulenlagerteils fixiert ist, Druckerzeugungsteile (89a, 89b, 92) der ersten Spule (88) und der zweiten Spule (91) angeordnet sind, um sich vertikal einander zu schneiden, und die Magnetkraft des Magneten (67a, 67b) an die beiden Druckerzeugungsteile gemeinsam angelegt wird.

4. Linseneinrichtung, welche einen Bildstabilisator nach einem der Ansprüche 1 bis 3 umfasst.

5. Abbildvorrichtung, welche eine Linseneinrichtung nach Anspruch 4 umfasst.

## Revendications

1. Stabilisateur d'image comprenant :
un dispositif d'actionnement électrique incluant une bobine (88) et un aimant (67a, 67b) qui sont capables de se déplacer relativement l'un par rapport à l'autre ;
un cadre mobile (51) sur lequel sont fixés un élément parmi la bobine (88) et l'aimant (67a, 67b), et une lentille correctrice (15) ;
un cadre support (52) sur lequel est fixé l'autre élément parmi la bobine (88) et l'aimant (67a, 67b) et qui supporte le cadre mobile (51) pour être capable de se déplacer ;
la lentille correctrice (15) étant capable de se déplacer dans une première direction (X) perpendiculaire à l'axe optique d'un système de lentilles et dans une seconde direction (Y) perpendiculaire à la première direction (X) et perpendiculaire à l'axe optique, au moyen du dispositif d'actionnement électrique (54) qui déplace le cadre mobile (51), et l'axe optique de la lentille correctrice (15) étant commandé de manière à correspondre à l'axe optique du système de lentilles pour stabiliser les images obtenues à travers le système de lentilles, **caractérisé en ce qu'**il comprend en outre :
un premier élément à effet Hall (94) et un second élément à effet Hall (95) qui détectent les informations concernant la position de la lentille correctrice (15) dans la première direction (X) et dans la deuxième direction (Y) en détectant la force magnétique de l'aimant (67a, 67b), ledit aimant comportant un premier chanfrein (57a) et un second chanfrein (57b) sur les coins sur un côté et aux deux extrémités dans le sens de la longueur, lesdits premier et second chanfreins (57a, 57b) étant inclinés d'un angle approprié par rapport à la première direction (X) et à la seconde direction (Y), dans lequel
le premier élément à effet Hall (94) est placé dans une position recouverte par le bord dudit premier chanfrein (57a) et le second élément à effet Hall (95) est placé dans une position recouverte par le bord dudit second chanfrein (57b),
dans lequel
tandis que l'axe optique de la lentille correctrice (15) correspond à l'axe optique du système de lentilles, le premier élément à effet Hall (94) et le second élément à effet Hall (95) sont agencés de façon que les centres des parties détectrices (94a, 95a) qui détectent la force magnétique correspondent approximativement aux bords desdits premier et second chanfreins, et le premier élément à effet Hall (94) et le second élément à effet Hall (95) détectent une force magnétique dans les directions perpendiculaires aux directions dans lesquelles s'étendent les bords.

2. Stabilisateur d'image selon la revendication 1, dans lequel :
le dispositif d'actionnement électrique (54) comporte une première bobine (88) pour déplacer la lentille correctrice (15) dans la première direction (X), une seconde bobine (91) pour déplacer la lentille correctrice (15) dans la seconde direction (Y), et l'aimant fournissant la force magnétique à la première bobine (88) et à la seconde bobine (91) ; et
la force magnétique de l'aimant (67a, 67b) est appliquée aux deux bobines (88, 91) en commun, permettant de déplacer la lentille correctrice (15) dans la première direction (X) et dans la seconde direction (Y).

3. Stabilisateur d'image selon la revendication 2, dans lequel :
la première bobine (88) et la seconde bobine (91) sont formées de bobines plates ayant une forme plane, de bobines cylindriques empilées jusqu'à une certaine hauteur ou d'une combinaison de la bobine plate et de la bobine cylindrique ; et
la première bobine (88) est fixée sur une surface d'un élément support de bobine fixé au cadre mobile (51) ou au cadre support (52), la seconde bobine (91) est fixée sur l'autre surface de l'élément support de bobine, des parties génératrices de poussée (89a, 89b, 92) de la première bobine (88) et de la seconde bobine (91) sont disposées de manière à se couper verticalement l'une l'autre, et la force magnétique de l'aimant (67a, 67b) est appliquée en commun aux deux parties génératrices de poussée.

4. Dispositif de lentille comprenant un stabilisateur d'image selon l'une quelconque des revendications 1 à 3.

5. Appareil d'imagerie comprenant un dispositif de lentille selon la revendication 4.
